# FASCICULE DE BREVET EUROPEEN

(11) **EP 3 519 784 B1**
(45) Date de publication et mention de la délivrance du brevet: **26.08.2026**
(21) Numéro de dépôt: 17781047.0
(22) Date de dépôt: 28.09.2017
(51) Int. Cl.: G01J 9/02

(54) **PROCEDE ET DISPOSITIF D'ANALYSE D'UNE ONDE ELECTROMAGNETIQUE EN HAUTE DEFINITION**
VERFAHREN UND VORRICHTUNG ZUR ANALYSE EINER ELEKTROMAGNETISCHEN WELLE IN HOHER AUFLÖSUNG
METHOD AND DEVICE FOR ANALYSING AN ELECTROMAGNETIC WAVE IN HIGH DEFINITION

(30) Priorité: 30.09.2016 FR 1659411
(43) Date de publication de la demande: 07.08.2019
(73) Titulaire: Phasics, 91450 Soisy-Sur-Seine (FR)
(72) Inventeur: WATTELLIER, Benoît, 75012 Paris (FR); SAINTOYANT, Anaïs, 78470 Saint Remy Les Chevreuse (FR)
(74) Mandataire: IPAZ
(86) Numéro de dépôt international: PCT/EP2017/074674
(87) Numéro de publication internationale: WO 2018/060359

(56) Documents cités:
- US-B1- 6 538 749
- SABRINA VELGHE: "Wave-front reconstruction from multidirectional phase derivatives generated by multilateral shearing interferometers", OPTICS LETTERS, vol. 30, no. 3, 1 February 2005 (2005-02-01), US, pages 245, XP093160912, ISSN: 0146-9592, DOI: 10.1364/OL.30.000245
- RICARDO LEGARDA-SÁENZ: "Robust wave-front estimation from multiple directional derivatives", OPTICS LETTERS, vol. 25, no. 15, 1 August 2000 (2000-08-01), US, pages 1089, XP093160916, ISSN: 0146-9592, DOI: 10.1364/OL.25.001089
- JEAN-CHRISTOPHE F. CHANTELOUP ET AL: "Compact high resolution four wave lateral shearing interferometer", SPIE - INTERNATIONAL SOCIETY FOR OPTICAL ENGINEERING. PROCEEDINGS, vol. 5252, 30 September 2003 (2003-09-30), US, pages 282 - 292, XP055392592, ISSN: 0277-786X, ISBN: 978-1-5106-0753-8, DOI: 10.1117/12.513739
- KARP J H ET AL: "Integrated diffractive shearing interferometry for adaptive wavefront sensing", APPLIED OPTICS, OPTICAL SOCIETY OF AMERICA, WASHINGTON, DC; US, vol. 47, no. 35, 10 December 2008 (2008-12-10), pages 6666 - 6674, XP001521230, ISSN: 0003-6935, DOI: 10.1364/AO.47.006666

## Description

### Domaine technique

La présente invention concerne un procédé pour l'analyse (typiquement la mesure du champ complexe) d'une onde électromagnétique en haute définition. Elle concerne aussi un dispositif mettant en œuvre un procédé selon l'invention.

L'invention permet à un utilisateur d'améliorer les performances en termes de résolution et de définition des analyseurs de surface d'onde. Le domaine de l'invention est plus particulièrement celui des analyseurs de phase d'une onde électromagnétique ou d'un « front d'onde ».

### Etat de la technique antérieure

La résolution des images de phase est une problématique importante.

On connaît des analyseurs de front d'onde selon l'état de l'art basés sur la technologie Shack-Hartmann. Cette technologie utilise une matrice de microlentilles placée devant un capteur matriciel. Cette matrice de microlentilles permet d'échantillonner spatialement le front d'onde incident. Chaque microlentille focalise sur le capteur chacun des différents échantillons du front d'onde. La mesure de la position de ces différentes taches sur le capteur permet de calculer les gradients de la phase du front d'onde incident. Cependant, pour pouvoir calculer le barycentre de chaque tache, il est nécessaire de répartir son étalement sur plusieurs pixels du capteur. Celui-ci est ainsi subdivisé, chaque subdivision correspondant à plusieurs pixels, typiquement 16x16. Chacune de ces subdivisions permet d'obtenir un seul point de mesure de phase. La résolution spatiale de l'image de phase se retrouve donc dégradée par rapport à la résolution du capteur.

Pour améliorer la résolution spatiale, on connaît des analyseurs de front d'onde selon l'état de l'art, par exemple la gamme de référence SID4 commercialisée par la société Phasics comprenant un réseau faisant face à un capteur et tel qu'utilisé dans l'article « Quadriwave lateral shearing interferometry for quantitative phase microscopy of living cells » publié dans la revue OPTICS EXPRESS en 2009 (vol. 17, n°15). Ces analyseurs permettent de caractériser le front d'onde incident par la technique appelée interférométrie à décalage quadrilatéral. Etant donné que l'interférogramme enregistré est quasiment sinusoïdal, un faible nombre de pixels, de préférence 4x4, permet d'échantillonner leur déformation et de calculer les gradients de phase du front d'onde incident et améliore ainsi la résolution des mesures par rapport à la technologie Shack-Hartmann. Il est à noter que la résolution spatiale des images de phase reste cependant moindre que la résolution du capteur.

On connaît aussi des procédés d'analyse de phase, tel que celui décrit dans l'article « Spatial carrier phase-shifting algorithm based on principal component analysis method » paru dans la revue OPTICS EXPRESS en 2012 (vol. 20, n°15). Selon ce procédé, on enregistre un unique interférogramme, puis on génère informatiquement d'autres interférogrammes décalés spatialement d'un certain nombre de pixels voisins en supposant que certaines données, notamment la phase, sont constantes sur ce nombre de pixels. Cette méthode permet d'obtenir des images de phase rapidement. Cependant, la résolution des images de phase obtenue n'est pas non plus celle du capteur utilisé, étant donné que l'on suppose la phase constante sur plusieurs pixels. La résolution de la mesure de phase s'en trouve donc amoindrie par rapport à celle du capteur. Le but de ce procédé selon l'état de l'art n'est pas d'obtenir des images de phase avec une résolution élevée mais d'obtenir rapidement une image de phase avec une résolution un peu dégradée.

D'autres exemples de l'état de la technique sont donnés dans les documents US6538749; "Compact, high resolution, four wave lateral shearing interferometer", Chanteloup et al., SPIE 2004; "Integrated diffractive shearing interferometry for adaptive wavefront sensing", Karp et al., Optical Society of America, 2008; "Wave-front reconstruction from multidirectional phase derivatives generated by multilateral shearing interferometers", S. Velghe et al., 01.02.2005, Optics Letters; et "Robust wave-front estimation from multiple directional derivatives", R. Legarda-Sáenz et al., 01.08.2000, Optics Letters.

Le but de la présente invention est de proposer un procédé et/ou dispositif d'analyse d'une onde électromagnétique plus rapide et/ou plus compact et/ou avec une meilleure définition ou résolution par rapport à l'état de l'art.

### Exposé de l'invention

Cet objectif est atteint avec un procédé d'analyse d'une onde électromagnétique, selon la revendication 1.

De préférence il n'y a, entre l'élément diffractif et le capteur, aucun masque optique et/ou aucun autre élément diffractif. De préférence il n'y a, entre l'élément diffractif et le capteur, aucun élément optique.

Selon l'invention, l'élément diffractif génère des ordres de diffraction de l'onde électromagnétique incidente jusque sur le capteur, plus exactement au moins trois ordres (de préférence au moins quatre ordres) de diffraction de l'onde électromagnétique incidente jusque sur le capteur.

Selon l'invention, on peut avoir un cas préférentiel à deux dimensions (par exemple dans le cas où l'élément diffractif est une figure périodique ayant une périodicité spatiale selon deux axes de périodicité ou plus).

La figure d'interférence reçue par le capteur matriciel, et prise en compte dans le calcul d'une valeur d'intensité et/ou de gradient de phase et/ou de phase, peut comprendre au moins neuf harmoniques voire au moins treize harmoniques, typiquement :
- neuf harmoniques, par exemple dans le cas de quatre ordres de diffraction d'un réseau sinusoïdal parfait sur une grille cartésienne régulière
- treize harmoniques, par exemple dans le cas de cinq ordres de diffraction correspondant aux quatre ordres cités ci-dessus avec un ordre 0 le long de l'axe optique (ou spéculaire).

Le nombre des plusieurs positions relatives peut être égal au nombre d'harmoniques de la figure d'interférence reçues par le capteur matriciel et prises en compte par les moyens de traitement dans le calcul d'une valeur d'intensité et/ou de gradient de phase et/ou de phase.

Le procédé selon l'invention peut comprendre une génération d'ordres de diffraction de l'onde électromagnétique incidente par l'élément diffractif seul.

L'élément diffractif est de préférence une figure périodique ayant une périodicité spatiale selon au moins un ou deux axes de périodicité (et/ou de préférence des propriétés de diffraction selon respectivement au moins un ou deux couple(s) de directions spatiales de diffraction).

De préférence, il y a un angle d'inclinaison entre :
- le ou les axe(s) de périodicité de la figure périodique, et
- la projection, sur le plan de la figure périodique du ou des axe(s) d'alignement de pixels du capteur et/ou du ou des axes de déplacement des positions relatives entre l'élément diffractif et le capteur matriciel.

Un angle entre les axes de périodicité de la figure périodique et les axes d'alignement de pixels peut avoir une valeur différente d'un autre angle entre les axes d'alignement de pixels et les axes de déplacements.

Le procédé selon l'invention peut comprendre un calcul d'une valeur optimale de l'angle d'inclinaison. Le calcul d'une valeur optimale de l'angle d'inclinaison peut comprendre une maximisation du déterminant ou du conditionnement d'une matrice correspondant à un système d'équations comprenant de préférence autant d'équations que le nombre des plusieurs positions relatives entre l'élément diffractif et le capteur matriciel.

Le procédé selon l'invention peut comprendre en outre un réglage de cet angle, de préférence à sa valeur optimale.

Les plusieurs positions correspondent de préférence à plusieurs positions relatives entre l'élément diffractif et le capteur matriciel pour une position fixe de l'onde électromagnétique incidente. Les plusieurs positions correspondent de préférence à plusieurs positions de l'élément diffractif pour une position fixe de l'onde électromagnétique incidente et pour une position fixe du capteur matriciel.

Les plusieurs positions correspondent de préférence à plusieurs positions relatives entre l'élément diffractif et le capteur matriciel selon un axe de déplacement ou deux axes de déplacement ou plus, de préférence orthogonaux entre eux.

Chaque axe de déplacement ou au moins un des axes de déplacement peut être orthogonal à une direction de propagation de l'onde électromagnétique incidente sur l'élément diffractif.

Chaque position relative entre l'élément diffractif et le capteur matriciel peut différer d'au moins une des autres positions relatives :
- selon un premier pas selon un premier axe de déplacement, ce premier pas étant de préférence constant pour toutes les positions relatives, et/ou
- selon un deuxième pas selon un deuxième axe de déplacement, ce deuxième pas étant de préférence constant pour toutes les positions relatives.

Le procédé selon l'invention peut comprendre un calcul d'une valeur optimale du premier pas et/ou d'une valeur optimale du deuxième pas (y compris lorsque le ou les pas ne sont pas constants). Le calcul d'une valeur optimale du premier pas et/ou d'une valeur optimale du deuxième pas peut comprendre une maximisation du déterminant ou du conditionnement d'une matrice correspondant à un système d'équations comprenant de préférence autant d'équations que le nombre des plusieurs positions relatives entre l'élément diffractif et le capteur matriciel

Les plusieurs positions peuvent correspondre à au moins trois positions différentes. Les plusieurs positions peuvent correspondre à au moins neuf positions différentes, voire au moins treize positions différentes.

L'élément diffractif a de préférence une périodicité spatiale selon au moins deux axes de périodicité.

Dans une variante, l'élément diffractif peut être un élément diffractif mobile par rapport au capteur matriciel. L'élément diffractif peut comprendre un masque de Hartmann, un masque de Shack Hartmann, un réseau de diffraction, et/ou une combinaison d'un réseau d'intensité et d'un réseau de phase.

Dans une autre variante, l'élément diffractif peut être porté ou affiché par un composant optique fixe par rapport au capteur matriciel, ledit composant optique étant agencé pour déplacer l'élément diffractif (ou l'affichage de cet élément diffractif) par rapport au capteur matriciel, ledit composant optique étant de préférence un modulateur spatial de lumière par exemple à cristaux liquides.

Le calcul d'une valeur d'intensité et/ou de gradient de phase et/ou de phase peut comprendre une résolution d'un système d'équations comprenant de préférence autant d'équations que le nombre des plusieurs positions relatives entre l'élément diffractif et le capteur matriciel. Le système d'équations peut être résolu par utilisation d'une matrice pseudo inverse (de préférence dans l'espace réel ou direct)

Tout ou partie (de préférence toutes sauf une) des inconnues du système d'équation sont de préférence exprimées en fonction d'un gradient de la phase de l'onde électromagnétique incidente.

Suivant encore un autre aspect de l'invention, il est proposé un dispositif d'analyse d'une onde électromagnétique, selon la revendication 26.

De préférence il n'y a, entre l'élément diffractif et le capteur, aucun masque optique et/ou aucun autre élément diffractif. De préférence il n'y a, entre l'élément diffractif et le capteur, aucun élément optique.

Selon l'invention, l'élément diffractif est agencé pour générer des ordres de diffraction de l'onde électromagnétique incidente jusque sur le capteur, de plus exactement au moins trois ordres (de préférence au moins quatre ordres) de diffraction de l'onde électromagnétique incidente jusque sur le capteur.

Selon l'invention, on peut avoir un cas préférentiel à deux dimensions (par exemple dans le cas où l'élément diffractif est une figure périodique ayant une périodicité spatiale selon deux axes de périodicité ou plus).

Les moyens de traitement peuvent être agencés et/ou programmés pour prendre en compte, pour le calcul de la valeur d'intensité et/ou de gradient de phase et/ou de phase, au moins neuf harmoniques voire au moins treize harmoniques de la figure d'interférence reçus par le capteur matriciel , typiquement :
- neuf harmoniques, par exemple dans le cas de quatre ordres de diffraction d'un réseau sinusoïdal parfait sur une grille cartésienne régulière
- treize harmoniques, par exemple dans le cas de cinq ordres de diffraction correspondant aux quatre ordres cités ci-dessus avec un ordre 0 le long de l'axe optique (ou spéculaire).

Les moyens de traitement peuvent être agencés et/ou programmés pour commander les moyens de déplacement pour un nombre des plusieurs positions relatives égal au nombre d'harmoniques de la figure d'interférence prises en compte par les moyens de traitement dans le calcul d'une valeur d'intensité et/ou de gradient de phase et/ou de phase.

L'élément diffractif peut être agencé pour générer à lui seul des ordres de diffraction de l'onde électromagnétique incidente.

L'élément diffractif est de préférence une figure périodique ayant une périodicité spatiale selon au moins un ou deux axes de périodicité (et/ou de préférence des propriétés de diffraction selon respectivement au moins un ou deux couple(s) de directions spatiales de diffraction).

De préférence, il y a un angle d'inclinaison entre :
- le ou les axe(s) de périodicité de la figure périodique, et
- la projection, sur le plan de la figure périodique du ou des axe(s) d'alignement de pixels du capteur et/ou du ou des axes de déplacement des positions relatives entre l'élément diffractif et le capteur matriciel.

Les moyens de traitement sont de préférence agencés et/ou programmés pour calculer une valeur optimale de l'angle d'inclinaison . Ces moyens de traitement peuvent être agencés et/ou programmés pour calculer la valeur optimale de l'angle d'inclinaison par une maximisation du déterminant ou du conditionnement d'une matrice correspondant à un système d'équations comprenant de préférence autant d'équations que le nombre des plusieurs positions relatives entre l'élément diffractif et le capteur matriciel.

Le dispositif selon l'invention peut comprendre en outre des moyens de réglage de cet angle, de préférence à sa valeur optimale.

Les plusieurs positions peuvent correspondre à plusieurs positions relatives entre l'élément diffractif et le capteur matriciel pour une position fixe de l'onde électromagnétique incidente. Les plusieurs positions peuvent correspondre à plusieurs positions de l'élément diffractif pour une position fixe de l'onde électromagnétique incidente et pour une position fixe du capteur matriciel, les moyens de déplacement étant agencés pour déplacer l'élément diffractif pour une position fixe de l'onde électromagnétique incidente et pour une position fixe du capteur matriciel.

Les plusieurs positions peuvent correspondre à plusieurs positions relatives entre l'élément diffractif et le capteur matriciel selon un axe de déplacement ou deux axes de déplacement ou plus, de préférence orthogonaux entre eux.

Chaque axe de déplacement ou au moins un des axes de déplacement peut être orthogonal à une direction de propagation selon laquelle l'élément diffractif est agencé pour recevoir l'onde électromagnétique incidente.

Les moyens de déplacement peuvent être agencés pour que chaque position relative entre l'élément diffractif et le capteur matriciel diffère d'au moins une des autres positions relatives :
- selon un premier pas selon un premier axe de déplacement, ce premier pas étant de préférence constant pour toutes les positions relatives, et/ou
- selon un deuxième pas selon un deuxième axe de déplacement, ce deuxième pas étant de préférence constant pour toutes les positions relatives.

Les moyens de traitement sont de préférence agencés et/ou programmés pour calculer une valeur optimale du premier pas et/ou une valeur optimale du deuxième pas (y compris lorsque le ou les pas ne sont pas constants). Ces moyens de traitement peuvent être agencés et/ou programmés pour calculer une valeur optimale du premier pas et/ou une valeur optimale du deuxième pas par une maximisation du déterminant ou du conditionnement d'une matrice correspondant à un système d'équations comprenant de préférence autant d'équations que le nombre des plusieurs positions relatives entre l'élément diffractif et le capteur matriciel.

Les plusieurs positions peuvent correspondre à au moins trois positions différentes.

Les plusieurs positions peuvent correspondre à au moins neuf positions différentes, voire au moins treize positions différentes.

L'élément diffractif a de préférence une périodicité spatiale selon au moins deux axes de périodicité.

Dans une variante, l'élément diffractif peut être un élément diffractif mobile par rapport au capteur matriciel. L'élément diffractif peut comprendre un masque de Hartmann, un masque de Shack Hartmann, un réseau de diffraction, et/ou une combinaison d'un réseau d'intensité et d'un réseau de phase.

Dans une autre variante, l'élément diffractif peut être porté ou affiché par un composant optique fixe par rapport au capteur matriciel, ledit composant optique étant agencé pour déplacer l'élément diffractif (ou l'affichage de cet élément diffractif) par rapport au capteur matriciel, ledit composant optique étant de préférence un modulateur spatial de lumière par exemple à cristaux liquides.

Les moyens de traitement peuvent être agencés et/ou programmés pour calculer une valeur d'intensité et/ou de gradient de phase et/ou de phase par une résolution d'un système d'équations comprenant de préférence autant d'équations que le nombre des plusieurs positions relatives entre l'élément diffractif et le capteur matriciel. Les moyens de traitement peuvent être agencés et/ou programmés pour résoudre le système d'équations par utilisation d'une matrice pseudo inverse (de préférence dans l'espace réel).

Tout ou partie (de préférence toutes sauf une) des inconnues du système d'équation sont de préférence exprimées en fonction d'un gradient de la phase de l'onde électromagnétique incidente.

### Description des figures et modes de réalisation

D'autres avantages et particularités de l'invention apparaîtront à la lecture de la description détaillée de mises en œuvre et de modes de réalisation nullement limitatifs, et des dessins annexés suivants :
- la figure 1 est une vue schématique d'un mode de réalisation préféré de dispositif selon l'invention mettant en œuvre un mode de réalisation préféré de procédé selon l'invention, comprenant une figure périodique 2 et un capteur 4,
- la figure 2 illustre neuf positions d'un point 19 de la figure périodique 2 par rapport au capteur 4, correspondant à P=9 positions relatives différentes entre la figure périodique 2 et le capteur matriciel 4, pour un exemple de réalisation particuliers ayant des pas dx_{C} et dy_{C} constants et égaux, et
- les figures 3 à 7 sont des équations expliquant ce mode de réalisation de procédé selon l'invention
- la figure 8 illustre la transformée de Fourier d'une figure d'interférence (ou interferogramme) de l'onde diffractée 10.

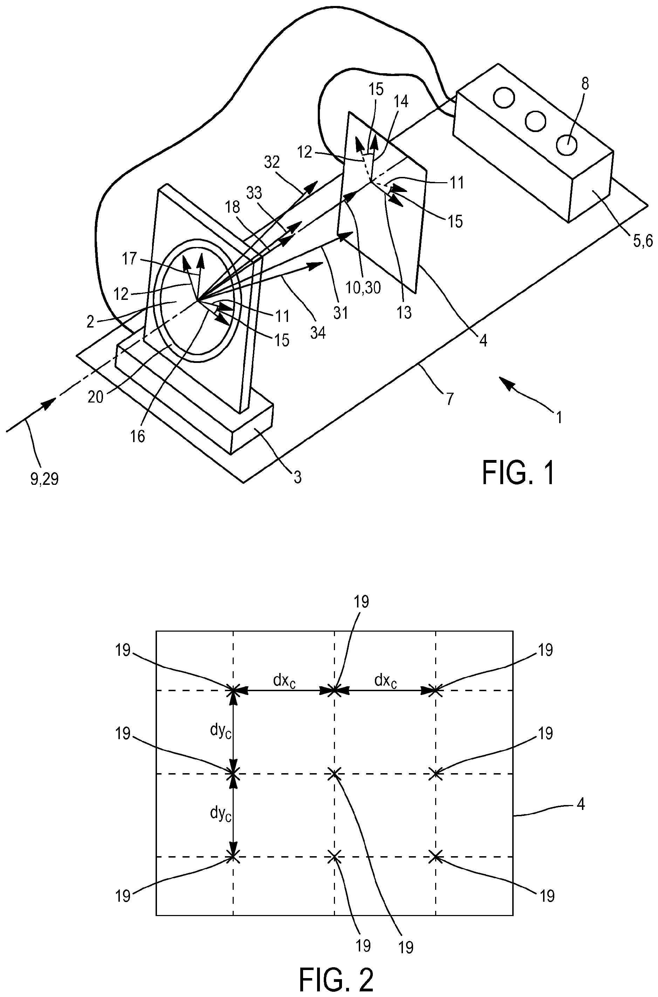

On va tout d'abord décrire, en référence aux figures 1 à 7, un mode de réalisation préféré de dispositif 1 d'analyse selon l'invention mettant en œuvre un mode de réalisation préféré de procédé selon l'invention.

Le dispositif 1 comprend un élément diffractif 2. Dans ce mode de réalisation l'élément diffractif 2 est un élément diffractif 2 mobile car monté sur des moyens de déplacement 3.

Dans ce mode de réalisation l'élément diffractif 2 est une figure périodique ayant une périodicité spatiale selon au moins un ou deux axes de périodicité (et/ou de préférence des propriétés de diffraction selon respectivement au moins un ou deux couple(s) de directions spatiales de diffraction).

Cette figure périodique 2 peut être une figure périodique de transmission (comme illustré) ou de réflexion de l'onde l'incidente 9.

Le dispositif 1 comprend un capteur 4, de préférence un capteur d'images CCD, CMOS, sCMOS ou microbolométrique, par exemple la caméra Bobcat IGV-B2020 .

Les moyens de déplacement 3 sont agencés pour modifier la position relative entre l'élément diffractif 2 et le capteur matriciel 4.

Les moyens de déplacement 3 sont agencés pour modifier cette position relative ou pour déplacer l'élément diffractif 2 selon au moins deux axes de déplacement 16, 17 situés dans le plan de l'élément diffractif 2 et de préférence orthogonaux entre eux (et éventuellement en outre, pour des réglages, selon un troisième axe de déplacement 18 orthogonal aux axes 16, 17).

Les moyens de déplacement 3 comprennent une platine motorisée (platine piézoélectrique ou électromagnétique) et ont une précision de déplacement typique de 2/1000 du pas p de la figure périodique 2, typiquement de 40 nm. La platine 3 est par exemple une platine de référence Platine Newport NPXY200SG.

Les moyens de déplacement 3 sont reliés à des moyens (de préférence électroniques et/ou informatiques) de commande 5.

Les moyens 5 comprennent par exemple un circuit électronique analogique et/ou numérique, et/ou une unité centrale d'un ordinateur, et/ou un microprocesseur, et/ou des moyens logiciels.

Le capteur 4 comprend une matrice bidimensionnelle de pixels alignés selon deux axes 13, 14 d'alignement de pixels.

Les pixels sont typiquement de forme carrée et sont alignés selon les deux axes 13, 14 avec une période par exemple égale à 7,4 µm. Dans une variante, la période peut varier entre les deux axes 13 et 14.

Dans ce mode de réalisation, les deux axes 13, 14 d'alignement de pixels sont orthogonaux entre eux.

Le capteur 4 est relié à des moyens 6 (de préférence électroniques et/ou informatiques) de réception et de traitement des signaux acquis par le capteur 4.

Les moyens 6 comprennent par exemple un circuit électronique analogique et/ou numérique, et/ou une unité centrale d'un ordinateur, et/ou un microprocesseur, et/ou des moyens logiciels.

Les moyens 6 sont agencés et/ou programmés pour mettre en œuvre chacune des étapes de calcul décrites par la suite pour le mode de réalisation de procédé selon l'invention.

L'élément diffractif 2, les moyens de déplacement 3, le capteur 4, les moyens de commande 5, et les moyens de traitement 6 sont placés à l'intérieur d'un boitier schématisé par la référence 7 sur la figure 1.

Le dispositif 1 comprend un ou plusieurs connecteurs 8 (par exemple du type USB, micro USB, RS232, BNC, etc...).

Chaque connecteur 8 est accessible depuis l'extérieur du boîtier 7, notamment afin d'envoyer vers l'extérieur du dispositif 1 les résultats des traitements, par les moyens 6, des signaux acquis par le capteur 4 et/ou afin d'envoyer, depuis l'extérieur du dispositif 1, des instructions aux moyens de commande 5 et/ou aux moyens de traitement 6.

L'élément diffractif 2 est agencé pour recevoir une onde électromagnétique incidente 9 se propageant selon une direction de propagation 29.

L'élément diffractif 2 est agencé pour générer des répliques du faisceau incident 9 de sorte que ces répliques interfèrent entre elles par propagation.

Les moyens de déplacement 3 sont agencés pour déplacer l'élément diffractif 2 pour une position fixe de l'onde électromagnétique incidente 9 et pour une position fixe du capteur matriciel 4.

La figure périodique 2 est plane.

La figure périodique 2 a une périodicité spatiale selon au moins un ou deux axes de périodicité 11, 12 (la périodicité spatiale pouvant varier d'un axe de périodicité 11 à un autre 12).

La figure périodique 2 a des propriétés de diffraction selon respectivement au moins un ou deux couple(s) de directions spatiales de diffraction (32, 34) et/ou (31, 33).

L'élément diffractif 2 est donc agencé pour transformer cette onde électromagnétique incidente 9 en une onde électromagnétique diffractée 10.

L'élément diffractif 2 et le capteur 4 sont espacés par une distance non nulle (le long de l'axe moyen de propagation de l'onde diffractée).

L'onde diffractée 10 comprend (et de préférence consiste en) différents ordres de diffraction générés par la diffraction de l'onde incidente 9 par la figure périodique 2.

Ces ordres de diffraction vont interférer deux-à-deux et générer des systèmes de franges d'interférence. Dans l'espace de Fourier, chacun de ces systèmes de franges génère de l'information autour d'une fréquence spécifique, appelée « harmonique » dans la présente description.

Ainsi, les ordres de diffraction générés interfèrent au niveau du capteur matriciel 4. On obtient une figure d'interférence comportant également des axes de périodicité. La transformée de Fourier du signal obtenu par le capteur 4 comprend différentes harmoniques correspondant aux interférences entre chaque couple d'ordres de diffraction. Suivant le modèle utilisé pour décrire la formation de ce signal, le nombre d'harmoniques considérées comme utiles varie.

La direction de propagation 29 est perpendiculaire au plan de l'élément diffractif 2 (plan dans lequel la transformation d'onde incidente 9 en onde diffractée 10 est réalisée, et parallèle aux axes 11, 12 et/ou 16, 17) et/ou au plan du capteur 4 (plan comprenant les pixels du capteur 4, et parallèle aux axes 13, 14).

Le troisième axe de déplacement 18 est perpendiculaire au plan de l'élément diffractif 2 et/ou au plan du capteur 4.

Dans ce mode de réalisation, les axes 11, 12 sont orthogonaux entre eux.

Pour plus de simplicité, au moins un des deux axes de déplacement 16, 17 projeté dans le plan du capteur 4, et plus précisément dans le présent mode de réalisation chacun des deux axes de déplacement 16, 17, est parallèle à un des axes d'alignement 13, 14.

L'élément diffractif 2 est agencé pour, à lui seul, générer ou sélectionner (c'est-à-dire laisser passer jusqu'au capteur 4) que certains ordres de diffraction de l'onde électromagnétique incidente 9. L'élément diffractif 2 est agencé pour effectuer cette génération ou sélection sans combinaison avec un autre masque ou réseau ou élément ayant des propriétés de diffraction qui ne serait pas solidaire de l'élément diffractif 2.

Le présent mode de réalisation est à « deux dimensions ».

L'élément diffractif 2 est agencé pour générer au moins trois ordres de diffraction de l'onde électromagnétique incidente 9 jusque sur le capteur 4.

Plus exactement dans le présent mode de réalisation, l'élément diffractif 2 est agencé pour générer au moins (ou exactement) quatre ordres de diffraction de l'onde électromagnétique incidente 9 jusque sur le capteur 4, et les moyens de traitement sont agencés et/ou programmés pour prendre en compte, pour le calcul de la valeur d'intensité et/ou de gradient de phase et/ou de phase, au moins (ou exactement) neuf harmoniques de la figure d'interférence reçus par le capteur matriciel; voire l'élément diffractif 2 est agencé pour générer au moins (ou exactement) cinq ordres de diffraction de l'onde électromagnétique incidente 9 jusque sur le capteur 4, et les moyens de traitement sont agencés et/ou programmés pour prendre en compte, pour le calcul de la valeur d'intensité et/ou de gradient de phase et/ou de phase, au moins (ou exactement) treize harmoniques de la figure d'interférence reçus par le capteur matriciel.

L'élément diffractif 2 comprend typiquement n'importe quel type d'optique périodique.

L'élément diffractif 2 comprend par exemple un masque de Hartmann ou un masque modifié de Hartmann (ou « MHM » pour Masque de Hartmann Modifié) comme décrit pour la référence GR de la demande de brevet FR 2 795 175 A1 (typiquement réseau en silice avec un pas de 29,6µm) ou un masque de Shack Hartmann ou un réseau de diffraction, ou une combinaison d'un réseau d'intensité et d'un réseau de phase

On donnera par la suite des valeurs correspondant à l'utilisation d'un MHM.

Il existe un angle d'inclinaison 15 (supérieur à 0° et inférieur à 90°, typiquement égal à 30°±3°), dans une projection sur le plan de la figure périodique 2, entre :
- le ou les axes de périodicité 11 et/ou 12 et
- le ou les axes d'alignement respectivement 13 et/ou 14 de pixels, et/ou le ou les axes de déplacement 16, 17.

Aucune projection d'axe d'alignement de pixels 13, 14 dans le plan de la figure périodique 2 n'est de préférence parallèle au ou à un des axe(s) 11, 12.

L'élément 2 est monté sur des moyens de réglage 20 ou support rotatif 20 agencé pour permettre un réglage de la position angulaire 15 de l'élément 2 par rapport au capteur 4.

Le capteur 4 est agencé pour recevoir une figure d'interférence de l'onde électromagnétique diffractée 10.

Le dispositif 1 est agencé pour faire plusieurs acquisitions, par le capteur matriciel 4, d'un signal de l'onde électromagnétique diffractée 10 correspondant à plusieurs positions relatives (de préférence au moins trois positions différentes, de préférence au moins neuf positions différentes) entre l'élément diffractif 2 et le capteur matriciel 4. Chacun de ces signaux est donc un signal électronique (analogique et/ou numérique) généré par le capteur 4 en réponse à la réception de l'onde électromagnétique diffractée 10 et comprenant des données pour chacun des pixels du capteur 4.

Ces plusieurs positions relatives correspondent à plusieurs positions de l'élément diffractif 2 pour une position fixe de l'onde électromagnétique incidente 9 et pour une position fixe du capteur matriciel 4.

Les moyens de déplacement 3 sont agencés pour que chaque position relative entre l'élément diffractif 2 et le capteur matriciel 4 diffère d'au moins une des autres positions relatives :
- selon un premier pas selon le premier axe de déplacement 16, ce premier pas étant de préférence constant pour toutes les positions relatives, et/ou
- selon un deuxième pas selon le deuxième axe de déplacement 17, ce deuxième pas étant de préférence constant pour toutes les positions relatives.

Ces plusieurs positions relatives sont obtenues en déplaçant l'élément diffractif 2 (grâce à la platine 3).

Dans ce mode de réalisation, les deux axes de déplacement 16, 17 sont orthogonaux entre eux.

Dans ce mode de réalisation, les deux axes de déplacement 16, 17 sont orthogonaux à la direction de propagation 29 selon laquelle l'élément diffractif 2 est agencé pour recevoir l'onde 9 incidente.

On remarque en outre que cette direction de propagation 29 et le troisième axe de déplacement 18 sont confondus.

On remarque que le dispositif 1 ne comprend aucun autre élément ayant des propriétés de diffraction (réseau, etc.) qui ne soit pas solidaire de l'élément diffractif 2. Autrement dit, le dispositif 1 ne comprend aucun autre élément ayant des propriétés de diffraction (réseau, etc.) qui ne se déplace pas lorsque l'élément diffractif 2 se déplace (sous l'action de la platine 3).

On remarque qu'il n'y a, entre l'élément diffractif 2 et le capteur 4, aucun masque optique et/ou aucun autre élément diffractif ou réseau de diffraction. On remarque même qu'il n'y a, entre l'élément diffractif et le capteur, aucun élément optique (un tel élément optique pourrait être présent, mais rendrait l'invention moins compacte).

On va maintenant décrire un mode de réalisation préféré de procédé selon l'invention d'analyse d'une onde électromagnétique mis en œuvre par le dispositif 1.

### Réception en entrée du dispositif 1

Ce procédé, comprend une réception de l'onde électromagnétique incidente 9 par l'élément diffractif 2.

Cette onde est par exemple un faisceau quasiment collimaté de lumière blanche sortant d'un microscope.

L'onde électromagnétique incidente 9 n'est pas focalisée sur l'élément diffractif 2. L'onde électromagnétique incidente 9 est focalisée sur aucun point de l'élément diffractif 2.

L'onde 9 se propage selon une direction de propagation 29 perpendiculaire au plan de l'élément diffractif 2 et/ou au plan du capteur 4.

L'onde 9 se propage selon une direction de propagation 29 perpendiculaire aux axes 11 et 12.

### Diffraction en entrée du dispositif 1, et réception par le capteur 4

Le mode de réalisation de procédé selon l'invention comprend une transformation de cette onde électromagnétique incidente 9 en l'onde électromagnétique diffractée 10 par l'élément diffractif 2.

L'onde 10 se propage selon une direction de propagation moyenne 30, chaque ordre se propageant selon sa direction de propagation respective 31, 32, 33 ou 34 (dans le cas de 4 ordres).

La direction 30 est perpendiculaire au plan de l'élément diffractif 2 et/ou au plan du capteur 4.

La direction de propagation 30 est perpendiculaire aux axes 13 et 14.

Les directions de propagation 29 et 30 sont identiques.

L'élément diffractif 2 ne génère ou sélectionne, seul (notamment sans combinaison avec un autre masque ou réseau ou élément ayant des propriétés de diffraction non solidaire de l'élément diffractif 2) que certains ordres de diffraction de l'onde électromagnétique incidente 9.

L'élément diffractif 2 génère au moins trois ordres de diffraction, de préférence :
- au moins quatre ordres de diffraction (ou exactement quatre ordres de diffraction, par exemple répartis autour de l'axe optique 10,30 avec un angle de 90° qui sépare chacun d'entre eux, ces ordres se propageant selon leur direction respective 31,32, 33 et 34, comme illustré sur la figure 1) ou
- au moins cinq ordres de diffraction (ou exactement cinq ordres de diffraction, comprenant les quatre ordres précédemment décrits et en outre l'ordre zéro qui se propage selon l'axe optique 10,30)
correspondant respectivement à au moins (ou exactement) neuf ou treize harmoniques de la figure d'interférence reçue par le capteur matriciel 4.

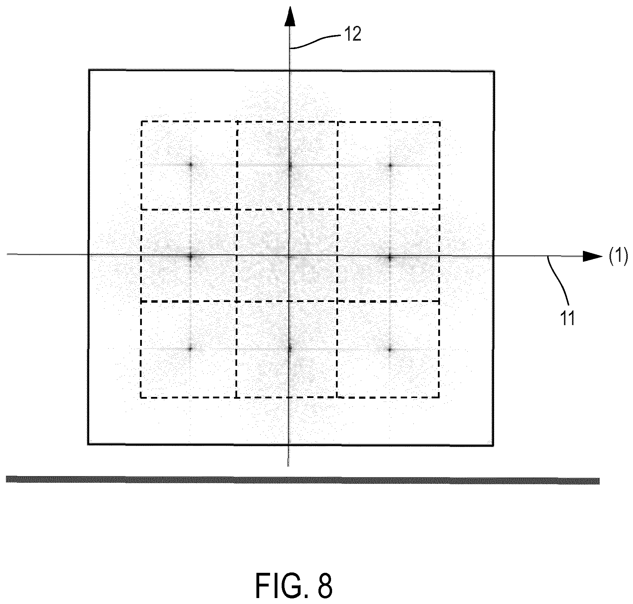

La figure 8 illustre la transformée de Fourier d'une figure d'interférence (ou interférogramme) dans le cas d'une onde diffractée 10 comprenant quatre ordres de diffraction. On peut voir sur la figure 8 les neuf harmoniques correspondants aux neuf zones carrées délimitées en pointillés.

Typiquement, le nombre d'harmoniques de la figure d'interférence reçues par le capteur matriciel, et prises en compte dans le calcul d'une valeur d'intensité et/ou de gradient de phase et/ou de phase, peut comprendre au moins neuf harmoniques voire au moins treize harmoniques, typiquement :
- les neuf harmoniques suivantes : 0 (croisement des axes 11 et 12 projetés sur le plan du capteur 4); +/- 1 selon l'axe 11 projeté sur le plan du capteur 4; +/- 1 selon l'axe 12 projeté sur le plan du capteur 4; +/- 1 selon les deux diagonales entre les axes 11 et 12 projetés sur le plan du capteur 4, ou
- les treize harmoniques suivantes : 0 (croisement des axes 11 et 12 projetés sur le plan du capteur 4); +/- 1 selon l'axe 11 projeté sur le plan du capteur 4; +/- 1 selon l'axe 12 projeté sur le plan du capteur 4; +/- 1 selon les deux diagonales entre les axes 11 et 12 projetés sur le plan du capteur 4; +/- 0,5 selon les deux diagonales entre les axes 11 et 12 projetés sur le plan du capteur 4.

Le mode de réalisation de procédé selon l'invention comprend une réception d'une figure d'interférence de l'onde électromagnétique diffractée 10 par le capteur matriciel 4.

### Déplacement de l'élément diffractif 2

Le mode de réalisation de procédé selon l'invention comprend plusieurs acquisitions, par le capteur matriciel 4, d'un signal de l'onde électromagnétique diffractée 10 correspondant à plusieurs positions relatives entre l'élément diffractif 2 et le capteur matriciel 4. Autrement dit, chaque acquisition, par le capteur matriciel 4, d'un signal de l'onde électromagnétique diffractée 10 correspond :
- à une position relative donnée entre l'élément diffractif 2 et le capteur matriciel 4
- c'est-à-dire à un interférogramme donné imagé sur le capteur 4.

Les plusieurs positions correspondent à plusieurs positions relatives entre l'élément diffractif 2 et le capteur matriciel 4 pour une position fixe de l'onde électromagnétique incidente 9, plus exactement à plusieurs positions de l'élément diffractif 2 pour une position fixe de l'onde électromagnétique incidente 9 et pour une position fixe du capteur matriciel 4.

Les plusieurs positions correspondent à plusieurs positions relatives entre l'élément diffractif 2 et le capteur matriciel 4 selon les deux axes de déplacement 16, 17.

Les axes de déplacement 16, 17 sont orthogonaux entre eux.

Au moins un des deux axes de déplacement 16, 17, et plus précisément dans le présent mode de réalisation chacun des deux axes de déplacement 16, 17, est orthogonal à la direction de propagation moyenne 29 de l'onde électromagnétique incidente 9 sur l'élément diffractif 2.

Les plusieurs positions correspondent à au moins trois, de préférence au moins neuf positions différentes.

Chaque position relative entre l'élément diffractif 2 et le capteur matriciel 4 diffère d'au moins une des autres positions relatives :
- selon un premier pas dx_{C} selon un premier axe 16 de déplacement, ce pas dx_{C} étant de préférence constant pour toutes les positions relatives, et/ou
- selon un deuxième pas dy_{C} selon un deuxième axe 17 de déplacement, ce pas dy_{C} étant de préférence constant pour toutes les positions relatives.

On peut utiliser n'importe quelle forme de balayage : en grille, en S, en spirale, etc.

Le pas dx_{C} ou dy_{C} a une valeur typique comprise entre 10µm et 30 µm, avec une précision d'au moins 0,04 µm (toujours dans le cas d'un MHM).

### Calcul et traitement

Pour obtenir des images de phase « haute définition », on travaille sur les images du capteur 4 formées par les interférences des différents ordres de diffraction après propagation entre l'élément de diffraction 2 et le capteur 4. Dans ce mode de réalisation de procédé haute définition selon l'invention, on déplace l'élément de diffraction 2 afin de décaler en phase chacune des harmoniques composant le spectre de l'interférogramme.

Le mode de réalisation de procédé selon l'invention comprend un calcul (par les moyens de traitement 6), à partir des plusieurs acquisitions correspondant aux plusieurs positions relatives entre l'élément diffractif 2 et le capteur matriciel 4, d'une valeur d'intensité et/ou de gradient de phase et/ou de phase de l'onde électromagnétique incidente 9 en chacun des points du capteur matriciel 4.

Ce calcul comprend, pour chacun des points d'intérêt de l'onde électromagnétique incidente 9, une résolution d'un système d'équations comprenant autant d'équations que le nombre des plusieurs positions relatives entre l'élément diffractif 2 et le capteur matriciel 4.

Le système d'équations est résolu par exemple par utilisation d'une matrice pseudo inverse, dans l'espace réel ou dans l'espace de Fourier. La matrice pseudo-inverse est calculée par exemple à partir de l'algorithme d'algèbre linéaire de décomposition en valeurs singulières (ou SVD, de l'anglais : « singular value decomposition ») qui permet de décomposer la matrice en valeurs singulières. Lorsque les valeurs singulières sont trop faibles celles-ci ne sont pas prises en compte pour calculer la matrice pseudo inverse. La matrice pseudo-inverse permet de trouver la solution à un système d'équations linéaires au sens des moindres carrés.

Tout ou partie des inconnues (ci-après b, c, d, e, f, g, h, i, c'est-à-dire toutes sauf une, l'inconnue a) du système d'équation sont exprimées en fonction d'un gradient de la phase W de l'onde électromagnétique incidente 9 (gradient selon la coordonnée x et/ou y).

Ainsi, de manière générale dans ce mode de réalisation de procédé selon l'invention:
- si on utilise au moins N harmoniques ou exactement N harmoniques (avec N un nombre entier, de préférence supérieur ou égal à 2, de préférence supérieur ou égal à 9)
- alors on résout le système d'équations avec N inconnues, dont N-1 sont exprimées en fonction d'un gradient de la phase de l'onde électromagnétique incidente 9, et
- on utilise P positions relatives différentes entre l'élément diffractif 2 et le capteur matriciel 4, pour résoudre le système d'équations qui comprend alors P équations (avec P un nombre entier , de préférence supérieur ou égal à 2, de préférence supérieur ou égal à 9), avec :
   ∘ P>N en cas de sur-échantillonnage, ce qui permet d'augmenter le rapport signal sur bruit,
   ∘ P=N dans le cas le plus simple
   ∘ P<N si on utilise une redondance d'informations ou des relations entre des inconnues du système d'équations, ce qui permet de faire moins de déplacement et donc d'être plus rapide.

### Exemple de traitement

On va maintenant décrire un exemple de traitement pour : $P = 9$ $N = 9$$P = N$

L'élément diffractif 2 comprend une combinaison d'un réseau d'intensité et d'un réseau de phase comme décrit pour la référence GR de la demande de brevet FR 2 795 175 A, et est agencé pour sélectionner uniquement 4 ordres de diffractions. Le nombre d'harmoniques sera donc de neuf: 0 (croisement des axes 11 et 12 projetés sur le plan du capteur 4); +/- 1 selon l'axe 11 projeté sur le plan du capteur 4; +/- 1 selon l'axe 12 projeté sur le plan du capteur 4 et +/- 1 selon les deux diagonales entre ces deux axes 11 et 12 projetés sur le plan du capteur 4.

L'élément diffractif 2 considéré dans cet exemple est le masque de Hartmann modifié (cf FR 2 795 175 A1) en silice, de période de 29,6µm.

La figure 2 illustre neuf positions d'un même point 19 de l'élément diffractif 2 sur le capteur 4 correspondant aux P=9 positions relatives différentes entre l'élément diffractif 2 et le capteur matriciel 4.

On remarque que ces positions sont réparties de manière uniforme avec un pas dx_{C} constant et avec un pas dy_{C} constant.

L'approche utilisée ici se base sur des calculs dans l'espace de Fourier. Ils permettent de gérer l'aspect sinusoïdal des franges et donc d'exploiter l'information contenue dans les pixels entre les maxima, grâce à un fit sinusoïdal.

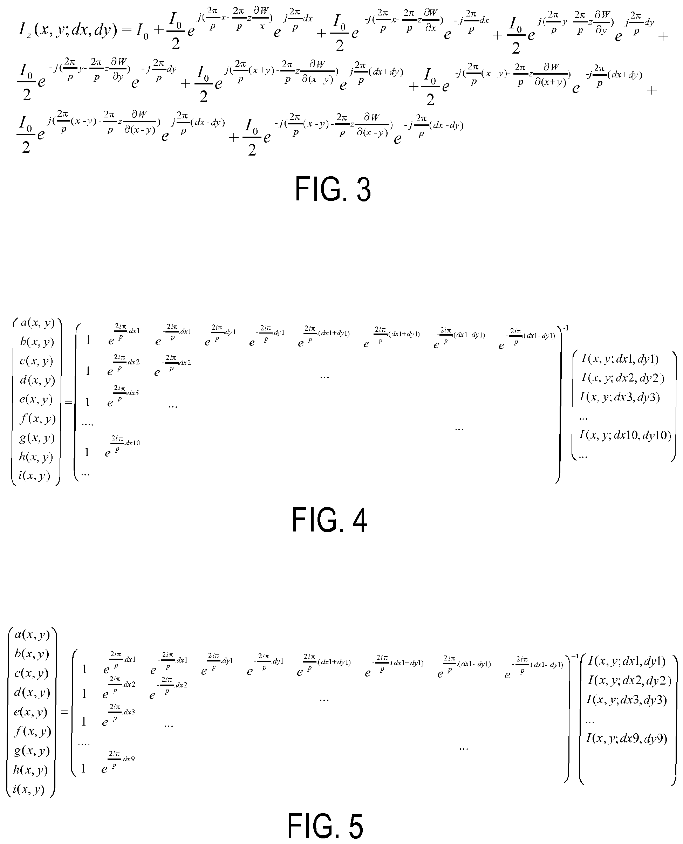

On se place dans le référentiel du réseau 2. L'interférogramme créé sur le capteur 4 et obtenu pour un décalage dx selon la coordonné x (le long de l'axe 11) et dy selon la coordonné y (le long de l'axe 12) du réseau 2 s'écrit de la manière suivante et comme illustré sur la figure 3: $\begin{matrix}{I}_{z} \left(x, y, dx, dy\right) = {I}_{0} + \frac{{I}_{0}}{2} {e}^{j \left(\frac{2 π}{p}x-\frac{2 π}{p}z\frac{\partial W}{\partial x}\right)} {e}^{j \frac{2 π}{p} dx} + \frac{{I}_{0}}{2} {e}^{- j \left(\frac{2 π}{p}x-\frac{2 π}{p}z\frac{\partial W}{\partial x}\right)} {e}^{- j \frac{2 π}{p} dx} + \frac{{I}_{0}}{2} {e}^{j \left(\frac{2 π}{p}y-\frac{2 π}{p}z\frac{\partial W}{\partial y}\right)} {e}^{j \frac{2 π}{p} dy} + \\ \frac{{I}_{0}}{2} {e}^{- j \left(\frac{2 π}{p}y-\frac{2 π}{p}z\frac{\partial W}{\partial y}\right)} {e}^{- j \frac{2 π}{p} dy} + \frac{{I}_{0}}{2} {e}^{j \left(\frac{2 π}{p}\left(x+y\right)-\frac{2 π}{p}z\frac{\partial W}{\partial \left(x+y\right)}\right)} {e}^{j \frac{2 π}{p} \left(dx+dy\right)} + \frac{{I}_{0}}{2} {e}^{- j \left(\frac{2 π}{p}\left(x+y\right)-\frac{2 π}{p}z\frac{\partial W}{\partial \left(x+y\right)}\right)} {e}^{- j \frac{2 π}{p} \left(dx+dy\right)} + \\ \frac{{I}_{0}}{2} {e}^{j \left(\frac{2 π}{p}\left(x-y\right)-\frac{2 π}{p}z\frac{\partial W}{\partial \left(x-y\right)}\right)} {e}^{j \frac{2 π}{p} \left(dx-dy\right)} + \frac{{I}_{0}}{2} {e}^{- j \left(\frac{2 π}{p}\left(x-y\right)-\frac{2 π}{p}z\frac{\partial W}{\partial \left(x-y\right)}\right)} {e}^{- j \frac{2 π}{p} \left(dx-dy\right)}\end{matrix}$ avec :
I₀ une constante correspondant à l'intensité de l'onde incidente ;
p le pas (aussi appelé période) du réseau 2 (de préférence identique selon les axes 11 et 12), typiquement p=29,6µm ;
z la distance (supposée uniforme) entre le plan de l'élément 2 et le plan du capteur 4 (mesurée perpendiculairement au plan du capteur 4 et au plan de l'élément 2 et/ou le long de la direction de propagation 30 de l'onde diffractée 10 et/ou le long de l'axe de déplacement 18). Cette distance z est typiquement inférieure à 1mm, pour améliorer la sensibilité aux variations de phase ;
W la différence de chemin optique (OPD) relié à la phase de l'onde par $φ = \frac{2 π}{λ} W$;
$\frac{\partial W}{\partial x}$ et $\frac{\partial W}{\partial y}$, dérivées partielles de l'OPD selon x et y, aussi appelés « gradients de phase » de l'onde incidente.
ou encore : $\begin{matrix}{I}_{z} \left(x, y, dx, dy\right) = a + b {e}^{j \frac{2 π}{p} dx} + c {e}^{- j \frac{2 π}{p} dx} + d {e}^{j \frac{2 π}{p} dy} + \\ e {e}^{- j \frac{2 π}{p} dy} + f {e}^{j \frac{2 π}{p} \left(dx+dy\right)} + g {e}^{- j \frac{2 π}{p} \left(dx+dy\right)} + \\ h {e}^{j \frac{2 π}{p} \left(dx-dy\right)} + i {e}^{- j \frac{2 π}{p} \left(dx-dy\right)}\end{matrix}$

Avec a, b, c, d, e (sans exposant), f, g, h, i les neuf inconnues suivantes du système d'équations à résoudre (« e » avec un exposant représentant la fonction exponentielle et j le nombre complexe): $a = {I}_{0}$ $b = \frac{{I}_{0}}{2} {e}^{j \left(\frac{2 π}{p}x-\frac{2 π}{p}z\frac{\partial W}{\partial x}\right)}$ $c = \frac{{I}_{0}}{2} {e}^{- j \left(\frac{2 π}{p}x-\frac{2 π}{p}z\frac{\partial W}{\partial x}\right)}$ $d = \frac{{I}_{0}}{2} {e}^{j \left(\frac{2 π}{p}y-\frac{2 π}{p}z\frac{\partial W}{\partial y}\right)}$ $e = \frac{{I}_{0}}{2} {e}^{- j \left(\frac{2 π}{p}y-\frac{2 π}{p}z\frac{\partial W}{\partial y}\right)}$ $f = \frac{{I}_{0}}{2} {e}^{j \left(\frac{2 π}{p}\left(x+y\right)-\frac{2 π}{p}z\frac{\partial W}{\partial \left(x+y\right)}\right)}$ $g = \frac{{I}_{0}}{2} {e}^{- j \left(\frac{2 π}{p}\left(x+y\right)-\frac{2 π}{p}z\frac{\partial W}{\partial \left(x+y\right)}\right)}$ $h = \frac{{I}_{0}}{2} {e}^{j \left(\frac{2 π}{p}\left(x-y\right)-\frac{2 π}{p}z\frac{\partial W}{\partial \left(x-y\right)}\right)}$ $i = \frac{{I}_{0}}{2} {e}^{- j \left(\frac{2 π}{p}\left(x-y\right)-\frac{2 π}{p}z\frac{\partial W}{\partial \left(x-y\right)}\right)}$

Etant donné que l'on déplace seulement le réseau 2 devant le capteur CCD 4 qui reste fixe, le front d'onde incident 9 est inchangé et les données a, b, c, d, e, f, g, h, i sont des constantes. Ces neuf constantes correspondent aux neuf harmoniques de la Transformée de Fourier.

On a donc neuf inconnues à déterminer. Pour cela, il faut utiliser neuf interférogrammes, ou plus ou moins selon le cas.

Le problème s'écrit de manière matricielle de la manière suivante et tel qu'illustré sur la figure 4 : $\left(\begin{matrix}a \left(x, y\right) \\ b \left(x, y\right) \\ c \left(x, y\right) \\ d \left(x, y\right) \\ e \left(x, y\right) \\ f \left(x, y\right) \\ g \left(x, y\right) \\ h \left(x, y\right) \\ i \left(x, y\right)\end{matrix}\right) = {\left(\begin{matrix}1 & {e}^{\frac{2 iπ}{p} . dx 1} & {e}^{- \frac{2 iπ}{p} . dx 1} & {e}^{\frac{2 iπ}{p} . dy 1} & {e}^{- \frac{2 iπ}{p} . dy 1} & {e}^{\frac{2 iπ}{p} . \left(dx1+dy1\right)} & {e}^{- \frac{2 iπ}{p} . \left(dx1+dy1\right)} & {e}^{\frac{2 iπ}{p} . \left(dx1-dy1\right)} & {e}^{- \frac{2 iπ}{p} . \left(dx1-dy1\right)} \\ 1 & {e}^{\frac{2 iπ}{p} . dx 2} & {e}^{- \frac{2 iπ}{p} . dx 2} & & & … & & & \\ 1 & {e}^{\frac{2 iπ}{p} . dx 3} & … & & & & & & \\ … . & & & & & & & … & \\ 1 & {e}^{\frac{2 iπ}{p} . dx 10} & & & & & & & \\ … & & & & & & & & \end{matrix}\right)}^{- 1} \left(\begin{matrix}I \left(x,y;dx1,dy1\right) \\ I \left(x,y;dx2,dy2\right) \\ I \left(x,y;dx3,dy3\right) \\ … \\ I \left(x,y;dx10,dy10\right) \\ …\end{matrix}\right)$ La résolution du système avec matrice pseudo inverse permet donc de trouver les inconnues a, b, c, d, e, f, g, h, i.

Selon le cas :
- P>N : plus le nombre d'interférogrammes utilisé sera grand, plus le rapport signal sur bruit sera élevé.
- P<N: en imposant certaines conditions, comme par exemple la redondance d'informations entre les pics, on peut obtenir les valeurs des coefficients avec moins de neuf interférogrammes décalés : si l'on s'intéresse aux inconnues a, b, c, d, e, f, g, h, i, on peut voir qu'il y a redondance d'informations. Par exemple, l'inconnue « c » est le complexe conjugué de l'inconnue « b ». Il est ainsi possible de trouver les valeurs de ces inconnues en utilisant moins de neuf interferogrammes.
- P=N dans le cas le plus simple.

Si l'on se place dans le cas le plus simple avec P=N, on utilise neuf interferogrammes décalés pour résoudre le système. On trouve alors ces neuf inconnues en réalisant une acquisition de neuf interférogrammes.

Le problème s'écrit matriciellement de la manière suivante et tel qu'illustré sur la figure 5 : $\left(\begin{matrix}a \left(x, y\right) \\ b \left(x, y\right) \\ c \left(x, y\right) \\ d \left(x, y\right) \\ e \left(x, y\right) \\ f \left(x, y\right) \\ g \left(x, y\right) \\ h \left(x, y\right) \\ i \left(x, y\right)\end{matrix}\right) = {\left(\begin{matrix}1 & {e}^{\frac{2 iπ}{p} . dx 1} & {e}^{- \frac{2 iπ}{p} . dx 1} & {e}^{\frac{2 iπ}{p} . dy 1} & {e}^{- \frac{2 iπ}{p} . dy 1} & {e}^{\frac{2 iπ}{p} . \left(dx1+dy1\right)} & {e}^{- \frac{2 iπ}{p} . \left(dx1+dy1\right)} & {e}^{\frac{2 iπ}{p} . \left(dx1-dy1\right)} & {e}^{- \frac{2 iπ}{p} . \left(dx1-dy1\right)} \\ 1 & {e}^{\frac{2 iπ}{p} . dx 2} & {e}^{- \frac{2 iπ}{p} . dx 2} & & & … & & & \\ 1 & {e}^{\frac{2 iπ}{p} . dx 3} & … & & & & & & \\ … . & & & & & & & … & \\ 1 & {e}^{\frac{2 iπ}{p} . dx 9} & & & & & & & \end{matrix}\right)}^{- 1} \left(\begin{matrix}I \left(x,y;dx1,dy1\right) \\ I \left(x,y;dx2,dy2\right) \\ I \left(x,y;dx3,dy3\right) \\ … \\ I \left(x,y;dx9,dy9\right) \\ \end{matrix}\right)$

Ayant déterminé les inconnues a, b, c, d, e, f, g, h, i on peut alors remonter, avec une « haute définition » :
- à la valeur de l'intensité I (coefficient a), et/ou
- aux gradients de la phase selon la direction x (coefficient b/c) et selon la direction y (coefficient d/e), et/ou
- à la phase, par une intégration numérique des gradients.

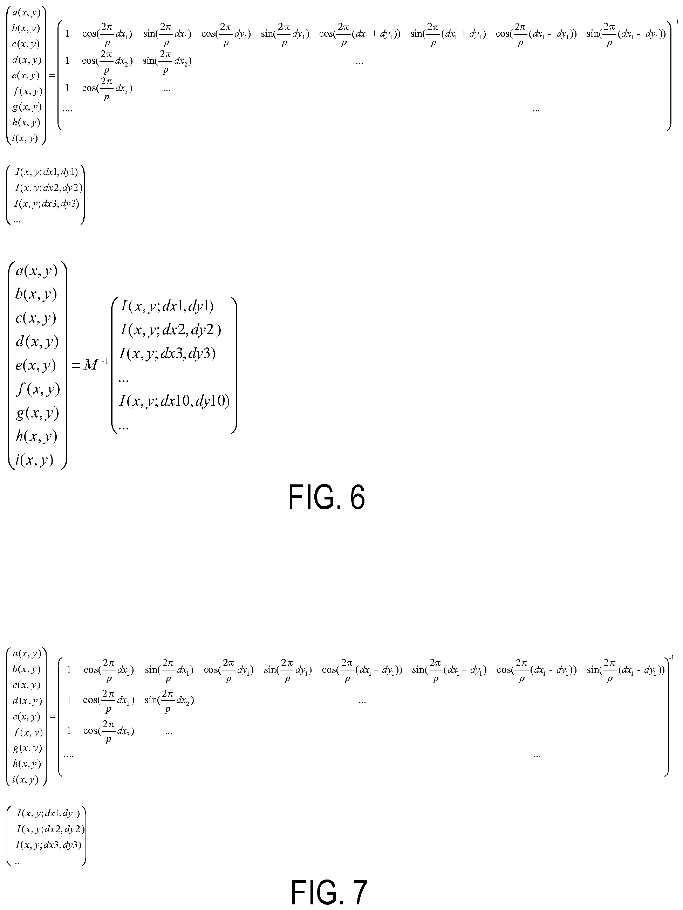

On remarque qu'il est aussi possible de réaliser ce calcul dans l'espace des réels en utilisant les termes oscillants cosinus et sinus. Cela permet d'améliorer la vitesse de calcul. On a alors les équations suivantes et telles qu'illustrées sur la figure 6 : $\begin{matrix}\left(\begin{matrix}a \left(x, y\right) \\ b \left(x, y\right) \\ c \left(x, y\right) \\ d \left(x, y\right) \\ e \left(x, y\right) \\ f \left(x, y\right) \\ g \left(x, y\right) \\ h \left(x, y\right) \\ i \left(x, y\right)\end{matrix}\right) = {\left(\begin{matrix}1 & cos \left(\frac{2 π}{p}{dx}_{1}\right) & sin \left(\frac{2 π}{p}{dx}_{1}\right) & cos \left(\frac{2 π}{p}{dy}_{1}\right) & sin \left(\frac{2 π}{p}{dy}_{1}\right) & cos \left(\frac{2 π}{p}\left({dx}_{1}+{dy}_{1}\right)\right) & sin \left(\frac{2 π}{p}\left({dx}_{1}+{dy}_{1}\right)\right) & cos \left(\frac{2 π}{p}\left({dx}_{1}-{dy}_{1}\right)\right) & sin \left(\frac{2 π}{p}\left({dx}_{1}-{dy}_{1}\right)\right) \\ 1 & cos \left(\frac{2 π}{p}{dx}_{2}\right) & sin \left(\frac{2 π}{p}{dx}_{2}\right) & & & … & & & \\ 1 & cos \left(\frac{2 π}{p}{dx}_{3}\right) & … & & & & & & \\ … . & & & & & & & … & \end{matrix}\right)}^{- 1} \\ \left(\begin{matrix}I \left(x,y;dx1,dy1\right) \\ I \left(x,y;dx2,dy2\right) \\ I \left(x,y;dx3,dy3\right) \\ …\end{matrix}\right)\end{matrix}$ $\left(\begin{matrix}a \left(x, y\right) \\ b \left(x, y\right) \\ c \left(x, y\right) \\ d \left(x, y\right) \\ e \left(x, y\right) \\ f \left(x, y\right) \\ g \left(x, y\right) \\ h \left(x, y\right) \\ i \left(x, y\right)\end{matrix}\right) = {M}^{- 1} \left(\begin{matrix}I \left(x,y;dx1,dy1\right) \\ I \left(x,y;dx2,dy2\right) \\ I \left(x,y;dx3,dy3\right) \\ … \\ I \left(x,y;dx10,dy10\right) \\ …\end{matrix}\right)$ avec $\begin{matrix}a \left(x, y\right) = {I}_{0} \left(x, y\right) ; b \left(x, y\right) = \frac{{I}_{0} \left(x, y\right)}{2} cos \left(\frac{2 π}{p}\left(z\frac{\partial W}{\partial x}-x\right)\right) ; c \left(x, y\right) = \frac{{I}_{0} \left(x, y\right)}{2} sin \left(\frac{2 π}{p}\left(z\frac{\partial W}{\partial x}-x\right)\right) ; d \left(x, y\right) \\ = \frac{{I}_{0} \left(x, y\right)}{2} cos \left(\frac{2 π}{p}\left(z\frac{\partial W}{\partial y}-y\right)\right) ; e \left(x, y\right) = \frac{{I}_{0} \left(x, y\right)}{2} sin \left(\frac{2 π}{p}\left(z\frac{\partial W}{\partial x}-x\right)\right) ; f \left(x, y\right) \\ = \frac{{I}_{0} \left(x, y\right)}{2} cos \left(\frac{2 π}{p}\left(z\frac{\partial W}{\partial \left(x+y\right)}-\left(x+y\right)\right)\right) ; g \left(x, y\right) \\ = \frac{{I}_{0} \left(x, y\right)}{2} sin \left(\frac{2 π}{p}\left(z\frac{\partial W}{\partial \left(x+y\right)}-\left(x+y\right)\right)\right) ; h \left(x, y\right) \\ = \frac{{I}_{0} \left(x, y\right)}{2} cos \left(\frac{2 π}{p}\left(z\frac{\partial W}{\partial \left(x-y\right)}-\left(x-y\right)\right)\right) ; i \left(x, y\right) \\ = \frac{{I}_{0} \left(x, y\right)}{2} sin \left(\frac{2 π}{p}\left(z\frac{\partial W}{\partial \left(x-y\right)}-\left(x-y\right)\right)\right)\end{matrix}$

En effectuant les tangentes inverses des rapports b/c et d/e, on a accès aux gradients de la phase.

### Amélioration de la résolution selon l'invention par rapport à l'état de l'art.

On entend par « résolution de mesure » la plus petite dimension de mesure de phase ou d'intensité ou de gradients de phase résolue par le capteur.

On entend par « résolution du capteur » la plus petite dimension détectée par le capteur. Cela est typiquement la taille du pixel de ce capteur.

On entend par « définition » le rapport entre la « résolution du capteur » utilisé pour la mesure et la « résolution de mesure ».

Comparons maintenant la situation venant d'être décrite (quatre ordres de diffraction, neuf harmoniques) dans le cas de l'état de l'art et dans le cas de l'invention.

Dans le cadre de l'approximation à quatre ordres de diffraction (interférence à 4 ondes portées par 4 vecteurs d'onde k₁, k₂, k₃ et k₄), l'intensité enregistrée par le capteur peut s'écrire : $I \left(r\right) = {\sum }_{m , n = 1}^{m , n = 4} {A}_{m} {{A}^{∗}}_{n} exp \left\{-j\left({k}_{m}-{k}_{n}\right).r\right\}$ L'information recherchée pour recouvrer l'amplitude du champ électromagnétique est contenue dans les termes ${A}_{m} {A}_{n}^{*}$. En chaque point r du détecteur, on a ainsi une mesure I(r) et seize inconnues ${A}_{m} {A}_{n}^{*}$ (m,n sont des entiers variant de 1 à 4) . Si on fait une transformée de Fourier du signal I(r), du fait de symétries, l'information est en fait regroupée autour de neuf harmoniques correspondant aux coefficients a,b,c,...

Dans le cas de l'état de l'art, par exemple dans l'article « Quadriwave lateral shearing interferometry for quantitative phase microscopy of living cells » publié dans la revue OPTICS EXPRESS en 2009 (vol. 17, n°15), il faut faire des hypothèses pour recouvrer l'information voulue et résoudre cette équation. Ainsi si on suppose que les supports fréquentiels de ces harmoniques sont distincts, on peut résoudre le problème ci-dessous en fenêtrant les différentes harmoniques. Cette supposition implique donc que la résolution des images obtenues est inférieure à celle du capteur CCD, car le support fréquentiel des harmoniques est limité. Dans le cas du produit commercial SID4, la perte en résolution vaut 4.

La « définition » est alors de ¼.

Dans le cas de l'invention, le fenêtrage autour des harmoniques n'est plus effectué. En effet, le déplacement de la figure périodique 2 entre chaque acquisition va permettre d'obtenir la totalité de l'information contenue par chaque harmonique. Le terme : $exp \left\{-j\left({k}_{m}-{k}_{n}\right).r\right\}$ va en effet être modulé de manière à ce que l'on puisse séparer les différents couples (m,n). Grâce à la résolution de l'équation linéaire à plusieurs inconnues décrite plus haut, on retrouve ainsi les termes ${A}_{m} {A}_{n}^{*}$ recherchés. Etant capable d'extraire la totalité de l'information pour toutes les fréquences échantillonnées par le capteur, il est donc possible de reconstruire une image de phase, intensité, et/ou gradient de phase de la même résolution que le capteur 4.

La résolution de mesure est améliorée, et la « définition » est alors de 1.

### Variante selon l'invention de la figure périodique 2

Tout ce qui est décrit dans la présente description reste valable en remplaçant le réseau 2 ou l'élément diffractif 2 ou la figure périodique 2 par un élément diffractif 2 ou une figure périodique 2 qui est affiché(e) ou porté(e) par un composant optique fixe par rapport au capteur matriciel 4, ledit composant optique étant agencé pour déplacer l'élément diffractif 2 ou la figure périodique 2 par rapport au capteur matriciel 4.

Ce composant optique est de préférence un modulateur spatial de lumière, tel un modulateur à cristaux liquides, qui affiche l'élément de diffraction 2 ou la figure périodique 2 et déplace l'élément de diffraction 2 ou la figure périodique 2 en modifiant son affichage.

Cette solution a pour avantage :
- d'être potentiellement moins onéreuse, et/ou
- de permettre de faire des mesures d'intensité en direct pour de la fluorescence sans perte de lumière due à l'absorption d'un réseau de diffraction,
mais est potentiellement moins générale car elle peut supposer que l'onde incidente soit polarisée linéairement.

### Optimisation de l'angle 15 et des pas dx et dy selon l'invention

Chacun des modes de réalisation de procédé ou variantes selon l'invention comprend en outre :
- un calcul (par les moyens de traitement 6) d'une valeur optimale du pas dx (ou dx_{C}) et/ou d'une valeur optimale du pas dy (ou dy_{C}), et/ou
- un calcul (par les moyens de traitement 6) d'une valeur optimale de l'angle d'inclinaison 15, éventuellement suivi d'une étape de réglage de cet angle 15 (par le support 20).

Le calcul d'une valeur optimale du pas dx (ou dx_{C}) et/ou d'une valeur optimale du pas dy (ou dy_{C}) comprend une maximisation du déterminant ou du conditionnement d'une matrice correspondant à un système d'équations comprenant autant d'équations que le nombre des plusieurs positions relatives entre la figure périodique et le capteur matriciel.

Le calcul d'une valeur optimale de l'angle d'inclinaison comprend une maximisation du déterminant ou du conditionnement d'une matrice correspondant à un système d'équations comprenant autant d'équations que le nombre des plusieurs positions relatives entre la figure périodique et le capteur matriciel.

Si P=N, le système d'équation correspond à une matrice carrée, et on va travailler sur son déterminant.

Si P≠N, le système d'équation correspond à une matrice qui n'est pas carrée, et on va travailler sur son conditionnement. Si A est une matrice, son conditionnement *K*(*A*) est le rapport entre sa valeur propre la plus grande et sa valeur propre la plus faible.

En reconsidérant l'exemple précédent à neuf inconnues a, b, c, d, e, f, g, h et i, nous avons vu que pour calculer une image de phase « haute définition » nous résolvons un système à neuf inconnues (correspondant aux neuf harmoniques de l'interférogramme). Pour résoudre ce système, la grille du réseau de diffraction 2 est déplacée au moins neuf fois afin de décaler en phase chacune des harmoniques. Ces neuf interferogrammes acquis permettent ainsi de résoudre le système.

Pour le résoudre, on inverse une matrice. Les éléments de cette matrice sont indiqués par la formule suivante et comme illustré sur la figure 7 : $\begin{matrix}\left(\begin{matrix}a \left(x, y\right) \\ b \left(x, y\right) \\ c \left(x, y\right) \\ d \left(x, y\right) \\ e \left(x, y\right) \\ f \left(x, y\right) \\ g \left(x, y\right) \\ h \left(x, y\right) \\ i \left(x, y\right)\end{matrix}\right) = {\left(\begin{matrix}1 & cos \left(\frac{2 π}{p}{dx}_{1}\right) & sin \left(\frac{2 π}{p}{dx}_{1}\right) & cos \left(\frac{2 π}{p}{dy}_{1}\right) & sin \left(\frac{2 π}{p}{dy}_{1}\right) & cos \left(\frac{2 π}{p}\left({dx}_{1}+{dy}_{1}\right)\right) & sin \left(\frac{2 π}{p}\left({dx}_{1}+{dy}_{1}\right)\right) & cos \left(\frac{2 π}{p}\left({dx}_{1}-{dy}_{1}\right)\right) & sin \left(\frac{2 π}{p}\left({dx}_{1}-{dy}_{1}\right)\right) \\ 1 & cos \left(\frac{2 π}{p}{dx}_{2}\right) & cos \left(\frac{2 π}{p}{dx}_{2}\right) & & & … & & & \\ 1 & cos \left(\frac{2 π}{p}{dx}_{3}\right) & … & & & & & … & \\ … & & & & & & & & \end{matrix}\right)}^{- 1} \\ ⋅ \left(\begin{matrix}I \left(x,y;dx1,dy1\right) \\ I \left(x,y;dx2,dy2\right) \\ I \left(x,y;dx3,dy3\right) \\ …\end{matrix}\right)\end{matrix}$ avec :
1) dxᵢ et dyᵢ (i un entier compris entre 1 et P) les déplacements effectués pour l'interferogramme numéro i. Ces déplacements sont les déplacements effectués dans le repère du réseau 2 selon les axes 11 et 12. Ils s'écrivent donc : ${dx}_{i} = {dx}_{c} cos \left(θ\right) + {dy}_{c} sin \left(θ\right)$ et ${dy}_{i} = - {dy}_{c} sin \left(θ\right) + {dy}_{c} cos \left(θ\right)$
2) dx_{c} et dy_{c} les déplacements réels dans le repère de la caméra 4 selon les axes 13 et 14 (qui est le même repère que la platine 3) et θ l'angle d'inclinaison 15 du réseau 2.
3) p la période du réseau 2.

Nous avons vu que pour résoudre le système, il faut inverser la matrice. Pour introduire le moins d'erreur possible lors de la résolution des neuf inconnues a, b, c, d, e, f, g, h, i il faut donc maximiser le déterminant (ou le conditionnement) de cette matrice.

Le déterminant ou le conditionnement de la matrice dépend à la fois des déplacements dx_{c} et dy_{c} de la platine 3 mais aussi de l'angle d'inclinaison 15 du réseau 2.

Ainsi pour engendrer le moins d'erreur possible sur le calcul des coefficients a, b, c, d, e, f, g, h, i on va chercher à maximiser le déterminant ou le conditionnement de la matrice.

Ainsi, la valeur optimale de l'angle d'inclinaison 15 et /ou la valeur optimale du premier pas et/ou la valeur optimale du deuxième pas est agencée pour minimiser les erreurs de calcul des inconnues (coefficients a, b, c, d, e, f, g, h, i) de ce système d'équations.

On calcule donc le déterminant ou le conditionnement pour différents triplets (dx_{c},dy_{c},θ). Les triplets pour lesquels la valeur du déterminant ou le conditionnement est élevée permettent de déterminer les points optimaux pour la réalisation d'images de phase « haute-définition».

Ce calcul de valeur optimale de pas et/ou d'angle 15 peut être effectué par le dispositif 1 avant une mesure sur l'onde 9, ou peut être mis en œuvre lors de la construction ou conception ou d'un calibrage du dispositif 1.

De manière avantageuse, ce calcul de valeur optimale de pas dx_{c},dy_{c} et/ou d'angle 15 :
- peut être effectué par le dispositif 1 :
   * avant une mesure sur l'onde 9 et/ou
   *après une modification de la figure périodique 2 (par remplacement manuel de l'élément diffractif 2 ou par modification de l'affichage de la figure périodique 2 sur le composant optique ou modulateur spatial de lumière), par exemple une modification de son pas p, et/ou
   *après une modification du nombre de déplacements effectués, par exemple pour réduire le bruit de mesure,
- dans le cas d'un calcul d'angle 15, être suivi d'un réglage de cet angle 15 à sa valeur optimale calculée, par les moyens de réglage 20, avant une mesure sur l'onde 9 (i.e. avant la transformation de l'onde électromagnétique incidente 9 en l'onde électromagnétique diffractée 10 et la réception, par le capteur matriciel 4, d'une figure d'interférence de l'onde électromagnétique diffractée 10 utilisée pour le calcul selon l'invention).

Bien sûr, l'invention n'est pas limitée aux exemples qui viennent d'être décrits et de nombreux aménagements peuvent être apportés à ces exemples sans sortir du cadre de l'invention. Ainsi, dans des variantes de chacun des modes de réalisation venant d'être décrit :
- au lieu de déplacer la figure périodique 2, on déplace le capteur 4. Ainsi, les plusieurs positions relatives correspondent à plusieurs positions du capteur matriciel 4 pour une position fixe de l'onde électromagnétique incidente 9 et pour une position fixe de la figure périodique 2. Cependant, cette variante est moins avantageuse car elle nécessite de recaler les interferogrammes afin que chacun des pixels (x,y) de chaque interférogramme correspondent aux mêmes points du faisceau incident ; et/ou
- les plusieurs positions relatives correspondent à plusieurs positions relatives entre la figure périodique 2 et le capteur matriciel 4 selon un seul axe de déplacement 16 (cet unique axe de déplacement 16 est alors de préférence orthogonal à la direction de propagation 29 de l'onde électromagnétique incidente 9 sur la figure périodique 2). Ceci peut être le cas :
   ∘ lorsque l'on est intéressé par une « haute résolution » que selon un axe 13. Dans ce cas, deux ordres de diffraction sont suffisants. Trois positions relatives entre la figure périodique 2 et le capteur 4 sont suffisantes, correspondant par exemple aux trois harmoniques 0 et +/- 1 selon l'axe 11 projeté sur le plan du capteur 4. Dans ce cas, il est suffisant que la figure périodique 2 ne comprenne des propriétés de diffraction que selon un axe de périodicité 11; ou
   ∘ lorsque l'on est intéressé par une « haute résolution » selon deux axes 13, 14, mais en limitant le déplacement de la figure périodique 2 ou du capteur 4 que selon un axe de déplacement 16; et/ou
- la figure périodique 2 a une périodicité spatiale selon plus de deux axes de périodicité (et génère donc plus de cinq ordres de diffraction). Ceci est par exemple le cas d'un élément diffractif 2 comprenant un réseau avec un motif périodique hexagonal ; et/ou
- les pas dx ou dx_{C}, et/ou dy ou dy_{C} ne sont pas forcément constants entre les différentes positions relatives ; et/ou
- il y a des éléments optiques entre la figure périodique 2 et le capteur 4, notamment des lentilles pour adapter la taille de l'onde 10 au capteur 4 et/ou des miroirs pour acheminer l'onde 10 jusqu'au capteur 4. Cependant, cette variante est moins avantageuse car elle augmente le volume et l'encombrement du dispositif 1 ; et/ou
- la méthode de calcul n'est pas nécessairement matricielle. Toute méthode permettant de résoudre le système de P équations est compatible avec l'invention ; et/ou
- la méthode de calcul n'est pas nécessairement dans l'espace réel ou de Fourier. On peut en fait utiliser toute fonction qui possède une fonction inverse permettant de revenir dans l'espace de départ, étant donné que les calculs reposent sur des combinaisons linéaires, et/ou
- toute la description précédente peut être généralisée en remplaçant la figure périodique 2 ou le réseau 2 par un élément diffractif 2 et inversement, et/ou
- toute la description précédente peut être généralisée avec un élément diffractif 2 qui génère l'onde diffractée 10 par réflexion et/ou transmission de l'onde incidente 9.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Procédé d'analyse d'une onde électromagnétique, comprenant :
- une réception d'une onde électromagnétique incidente (9) par un élément diffractif (2) et une transformation de cette onde électromagnétique incidente (9) en une onde électromagnétique diffractée (10) par l'élément diffractif (2),
- une réception, par un capteur matriciel (4), d'une figure d'interférence de l'onde électromagnétique diffractée (10), le capteur matriciel (4) ayant une matrice de pixels alignés selon un ou deux axe(s) d'alignement de pixels (13, 14),
le procédé comprenant plusieurs acquisitions, par le capteur matriciel (4), d'un signal de l'onde électromagnétique diffractée (10) correspondant à plusieurs positions relatives entre l'élément diffractif (2) et le capteur matriciel (4)
le procédé comprenant un calcul, à partir des plusieurs acquisitions correspondant aux plusieurs positions relatives entre l'élément diffractif (2) et le capteur matriciel (4), d'une valeur d'intensité et/ou de gradient de phase et/ou de phase pour différents points d'intérêt de l'onde électromagnétique incidente (9)
**caractérisé en ce que** l'élément diffractif (2) génère au moins trois ordres de diffraction de l'onde électromagnétique incidente (9) jusque sur le capteur (4) de sorte que ces ordres de diffraction interfèrent deux-à-deux et que la transformée de Fourier du signal obtenu par le capteur matriciel (4) comprend différentes harmoniques :
- correspondant aux interférences entre chaque couple d'ordres de diffraction, et
- prises en compte dans le calcul d'une valeur d'intensité et/ou de gradient de phase et/ou de phase.

2. Procédé selon la revendication 1, **caractérisé en ce qu'**il n'y a, entre l'élément diffractif (2) et le capteur (4), aucun masque optique et/ou aucun autre élément diffractif.

3. Procédé selon la revendication 1 ou 2, **caractérisé en ce qu'**il n'y a, entre l'élément diffractif (2) et le capteur (4), aucun élément optique.

4. Procédé selon l'une quelconque des revendications précédentes, **caractérisé en ce que** l'élément diffractif (2) génère au moins quatre ordres de diffraction de l'onde électromagnétique incidente (9) jusque sur le capteur(4).

5. Procédé selon l'une quelconque des revendications précédentes, **caractérisé en ce que** la figure d'interférence reçue par le capteur matriciel, et prise en compte dans le calcul d'une valeur d'intensité et/ou de gradient de phase et/ou de phase, comprend au moins neuf harmoniques.

6. Procédé selon l'une quelconque des revendications précédentes, **caractérisé en ce qu'**il comprend une génération d'ordres de diffraction de l'onde électromagnétique incidente (9) par l'élément diffractif (2) seul.

7. Procédé selon l'une quelconque des revendications précédentes, **caractérisé en ce que** l'élément diffractif est une figure périodique ayant une périodicité spatiale selon au moins un ou deux axes de périodicité.

8. Procédé selon la revendication 7, **caractérisé en ce qu'**il y a un angle d'inclinaison (15) entre :
- le ou les axe(s) de périodicité (11, 12), et
- la projection, sur le plan de l'élément diffractif du ou des axe(s) d'alignement de pixels (13, 14) et/ou du ou des axes de déplacement des positions relatives entre l'élément diffractif et le capteur matriciel.

9. Procédé selon la revendication 8 **caractérisé en ce qu'**il comprend un calcul d'une valeur de l'angle d'inclinaison (15) :
- le calcul d'une valeur d'intensité et/ou de gradient de phase et/ou de phase comprenant une résolution d'un système d'équations comprenant autant d'équations que le nombre des plusieurs positions relatives entre l'élément diffractif (2) et le capteur matriciel (4), système d'équations dont tout ou partie des inconnues est fonction de l'onde électromagnétique incidente (9)
- la valeur calculée de l'angle d'inclinaison (15) étant agencée pour minimiser les erreurs de calcul des inconnues dudit système d'équations,
- le procédé comprenant un réglage de cet angle d'inclinaison (15) à sa valeur calculée.

10. Procédé selon la revendication 9, **caractérisé en ce que** le calcul d'une valeur de l'angle d'inclinaison (15) comprend une maximisation du déterminant ou du conditionnement d'une matrice correspondant à ce système d'équations comprenant autant d'équations que le nombre des plusieurs positions relatives entre l'élément diffractif (2) et le capteur matriciel (4).

11. Procédé selon l'une quelconque des revendications précédentes, **caractérisé en ce que** les plusieurs positions correspondent à plusieurs positions relatives entre l'élément diffractif (2) et le capteur matriciel (4) pour une position fixe de l'onde électromagnétique incidente (9).

12. Procédé selon l'une quelconque des revendications précédentes, **caractérisé en ce que** les plusieurs positions correspondent à plusieurs positions de l'élément diffractif (2) pour une position fixe de l'onde électromagnétique incidente (9) et pour une position fixe du capteur matriciel (4).

13. Procédé selon l'une quelconque des revendications précédentes, **caractérisé en ce que** les plusieurs positions correspondent à plusieurs positions relatives entre l'élément diffractif (2) et le capteur matriciel (4) selon deux axes de déplacement (16, 17), de préférence orthogonaux entre eux.

14. Procédé selon la revendication 13, **caractérisé en ce qu'**au moins un des deux axes de déplacement (16, 17), de préférence chacun des deux axes de déplacement, est orthogonal à une direction de propagation (29) de l'onde électromagnétique incidente (9) sur l'élément diffractif (2).

15. Procédé selon l'une quelconque des revendications précédentes, **caractérisé en ce que** chaque position relative entre l'élément diffractif (2) et le capteur matriciel (4) diffère d'au moins une des autres positions relatives :
- selon un premier pas (dx_{C}) selon un premier axe de déplacement (16), ce premier pas étant de préférence constant pour toutes les positions relatives, et/ou
- selon un deuxième pas (dy_{c}) selon un deuxième axe de déplacement (17), ce deuxième pas étant de préférence constant pour toutes les positions relatives.

16. Procédé selon la revendication 15, **caractérisé en ce qu'**il comprend un calcul d'une valeur du premier pas et/ou d'une valeur du deuxième pas :
- le calcul d'une valeur d'intensité et/ou de gradient de phase et/ou de phase comprenant une résolution d'un système d'équations comprenant autant d'équations que le nombre des plusieurs positions relatives entre l'élément diffractif (2) et le capteur matriciel (4), système d'équations dont tout ou partie des inconnues est fonction de l'onde électromagnétique incidente (9)
- la valeur calculée du premier pas et/ou la valeur calculée du deuxième pas étant agencée pour minimiser les erreurs de calcul des inconnues dudit système d'équations.

17. Procédé selon la revendication 16, **caractérisé en ce que** le calcul d'une valeur du premier pas et/ou d'une valeur du deuxième pas comprend une maximisation du déterminant ou du conditionnement d'une matrice correspondant à ce système d'équations comprenant autant d'équations que le nombre des plusieurs positions relatives entre l'élément diffractif (2) et le capteur matriciel (4).

18. Procédé selon l'une quelconque des revendications précédentes, **caractérisé en ce que** les plusieurs positions correspondent à au moins trois positions différentes.

19. Procédé selon l'une quelconque des revendications précédentes, **caractérisé en ce que** les plusieurs positions correspondent à au moins neuf positions différentes.

20. Procédé selon l'une quelconque des revendications précédentes, **caractérisé en ce que** l'élément diffractif est un élément diffractif (2) mobile par rapport au capteur matriciel (4).

21. Procédé selon la revendication 20, **caractérisé en ce que** l'élément diffractif (2) comprend un masque de Hartmann, un masque de Shack Hartmann, un réseau de diffraction, et/ou une combinaison d'un réseau d'intensité et d'un réseau de phase.

22. Procédé selon l'une quelconque des revendications 1 à 20, **caractérisé en ce que** l'élément diffractif est porté par un composant optique fixe par rapport au capteur matriciel (4), ledit composant optique étant agencé pour déplacer l'élément diffractif par rapport au capteur matriciel (4), ledit composant optique étant de préférence un modulateur spatial de lumière.

23. Procédé selon l'une quelconque des revendications précédentes, **caractérisé en ce que** le calcul d'une valeur d'intensité et/ou de gradient de phase et/ou de phase comprend une résolution d'un système d'équations comprenant autant d'équations que le nombre des plusieurs positions relatives entre l'élément diffractif (2) et le capteur matriciel (4), système d'équations dont tout ou partie des inconnues est fonction de l'onde électromagnétique incidente (9).

24. Procédé selon la revendication 23, **caractérisé en ce que** le système d'équations est résolu par utilisation d'une matrice pseudo inverse.

25. Procédé selon la revendication 23 ou 24, **caractérisé en ce que** tout ou partie des inconnues du système d'équation sont exprimées en fonction d'un gradient de la phase de l'onde électromagnétique incidente (9).

26. Dispositif (1) d'analyse d'une onde électromagnétique, comprenant :
- un élément diffractif (2) agencé pour recevoir une onde électromagnétique incidente (9) et pour transformer cette onde électromagnétique incidente en une onde électromagnétique diffractée (10),
- un capteur matriciel (4) ayant une matrice de pixels alignés selon un ou deux axe(s) d'alignement de pixels (13, 14), ledit capteur (4) étant agencé pour recevoir une figure d'interférence de l'onde électromagnétique diffractée (10) en provenance de l'élément diffractif (2),
le dispositif (1) comprenant des moyens de déplacement (3) agencés pour modifier la position relative entre l'élément diffractif (2) et le capteur matriciel (4)
ledit dispositif étant agencé pour faire plusieurs acquisitions, par le capteur matriciel (4), d'un signal de l'onde électromagnétique diffractée (10) correspondant à plusieurs positions relatives entre l'élément diffractif (2) et le capteur matriciel (4)
le dispositif comprenant des moyens de traitement (6) agencés et/ou programmés pour calculer, à partir des plusieurs acquisitions correspondant aux plusieurs positions relatives entre l'élément diffractif et le capteur matriciel, une valeur d'intensité et/ou de gradient de phase et/ou de phase pour différents points d'intérêt de l'onde électromagnétique incidente
**caractérisé en ce que** l'élément diffractif est agencé pour générer au moins trois ordres de diffraction de l'onde électromagnétique incidente jusque sur le capteur, de sorte que ces ordres de diffraction interfèrent deux-à-deux et que la transformée de Fourier du signal obtenu par le capteur matriciel (4) comprend différentes harmoniques :
- correspondant aux interférences entre chaque couple d'ordres de diffraction, et
- prises en compte dans le calcul d'une valeur d'intensité et/ou de gradient de phase et/ou de phase.

## Patentansprüche

1. Verfahren für die Analyse einer elektromagnetischen Welle, umfassend:
- Empfangen einer einfallenden elektromagnetischen Welle (9) durch ein Beugungselement (2) und Umwandeln dieser einfallenden elektromagnetischen Welle (9) in eine gebeugte elektromagnetische Welle (10) durch das Beugungselement (2),
- Empfangen, durch einen Matrixsensor (4), einer Interferenzfigur der gebeugten elektromagnetischen Welle (10), wobei der Matrixsensor (4) eine Matrix von Pixeln aufweist, die entlang einer oder zwei Pixelausrichtungsachsen (13, 14) ausgerichtet sind,
wobei das Verfahren mehrere Erfassungen, durch den Matrixsensor (4), eines Signals der gebeugten elektromagnetischen Welle (10) umfasst, die mehreren relativen Positionen zwischen dem Beugungselement (2) und dem Matrixsensor (4) entsprechen,
wobei das Verfahren eine Berechnung eines Intensitäts- und/oder Phasengradienten- und/oder Phasenwerts für unterschiedliche Punkte von Interesse der einfallenden elektromagnetischen Welle (9) anhand der mehreren Erfassungen umfasst, die den mehreren relativen Positionen zwischen dem Beugungselement (2) und dem Matrixsensor (4) entsprechen,
**dadurch gekennzeichnet, dass** das Beugungselement (2) mindestens drei Beugungsordnungen der einfallenden elektromagnetischen Welle (9) bis auf den Sensor (4) erzeugt, sodass diese Beugungsordnungen paarweise interferieren und dass die Fourier-Transformierte des durch den Matrixsensor (4) erhaltenen Signals unterschiedliche Oberschwingungen umfasst:
- welche den Interferenzen zwischen jedem Paar von Beugungsordnungen entsprechen, und
- bei der Berechnung eines Intensitäts- und/oder Phasengradienten- und/oder Phasenwerts berücksichtigt werden.

2. Verfahren nach Anspruch 1, **dadurch gekennzeichnet, dass** zwischen dem Beugungselement (2) und dem Sensor (4) keine optische Maske und/oder kein anderes Beugungselement vorhanden ist.

3. Verfahren nach Anspruch 1 oder 2, **dadurch gekennzeichnet, dass** zwischen dem Beugungselement (2) und dem Sensor (4) kein optisches Element vorhanden ist.

4. Verfahren nach einem der vorstehenden Ansprüche, **dadurch gekennzeichnet, dass** das Beugungselement (2) mindestens vier Beugungsordnungen der einfallenden elektromagnetischen Welle (9) bis auf den Sensor (4) erzeugt.

5. Verfahren nach einem der vorstehenden Ansprüche, **dadurch gekennzeichnet, dass** die Interferenzfigur, die von dem Matrixsensor empfangen wird und bei der Berechnung eines Intensitäts- und/oder Phasengradienten- und/oder Phasenwerts berücksichtigt wird, mindestens neun Oberschwingungen umfasst.

6. Verfahren nach einem der vorstehenden Ansprüche, **dadurch gekennzeichnet, dass** es ein Erzeugen von Beugungsordnungen der einfallenden elektromagnetischen Welle (9) allein durch das Beugungselement (2) umfasst.

7. Verfahren nach einem der vorstehenden Ansprüche, **dadurch gekennzeichnet, dass** das Beugungselement eine periodische Figur ist, die eine räumliche Periodizität entlang mindestens einer oder zwei Periodizitätsachsen aufweist.

8. Verfahren nach Anspruch 7, **dadurch gekennzeichnet, dass** ein Neigungswinkel (15) besteht zwischen:
- der/den Periodizitätsachse(n) (11, 12), und
- der Projektion der Pixelausrichtungsachse(n) (13, 14) und/oder der Bewegungsachse(n) der relativen Positionen zwischen dem Beugungselement und dem Matrixsensor auf der Ebene des Beugungselements.

9. Verfahren nach Anspruch 8, **dadurch gekennzeichnet, dass** es eine Berechnung eines Werts des Neigungswinkels (15) umfasst:
- die Berechnung eines Intensitäts- und/oder Phasengradienten- und/oder Phasenwerts, umfassend ein Lösen eines Gleichungssystems, das so viele Gleichungen umfasst wie die Anzahl der mehreren relativen Positionen zwischen dem Beugungselement (2) und dem Matrixsensor (4), wobei die Unbekannten des Gleichungssystems ganz oder teilweise in Abhängigkeit von der einfallenden elektromagnetischen Welle (9) sind
- wobei der berechnete Wert des Neigungswinkels (15) dazu ausgelegt ist, die Berechnungsfehler der Unbekannten des Gleichungssystems zu minimieren,
- wobei das Verfahren eine Einstellung dieses Neigungswinkels (15) auf seinen berechneten Wert umfasst.

10. Verfahren nach Anspruch 9, **dadurch gekennzeichnet, dass** die Berechnung eines Werts des Neigungswinkels (15) eine Maximierung der Determinante oder der Kondition einer Matrix umfasst, die diesem Gleichungssystem entspricht, das so viele Gleichungen wie die Anzahl der mehreren relativen Positionen zwischen dem Beugungselement (2) und dem Matrixsensor (4) umfasst.

11. Verfahren nach einem der vorstehenden Ansprüche, **dadurch gekennzeichnet, dass** die mehreren Positionen mehreren relativen Positionen zwischen dem Beugungselement (2) und dem Matrixsensor (4) für eine feste Position der einfallenden elektromagnetischen Welle (9) entsprechen.

12. Verfahren nach einem der vorstehenden Ansprüche, **dadurch gekennzeichnet, dass** die mehreren Positionen mehreren Positionen des Beugungselements (2) für eine feste Position der einfallenden elektromagnetischen Welle (9) und für eine feste Position des Matrixsensors (4) entsprechen.

13. Verfahren nach einem der vorstehenden Ansprüche, **dadurch gekennzeichnet, dass** die mehreren Positionen mehreren relativen Positionen zwischen dem Beugungselement (2) und dem Matrixsensor (4) entlang zwei Bewegungsachsen (16, 17), vorzugsweise orthogonal zueinander, entsprechen.

14. Verfahren nach Anspruch 13, **dadurch gekennzeichnet, dass** mindestens eine der beiden Bewegungsachsen (16, 17), vorzugsweise jede der beiden Bewegungsachsen, orthogonal zu einer Ausbreitungsrichtung (29) der auf das Beugungselement (2) einfallenden elektromagnetischen Welle (9) ist.

15. Verfahren nach einem der vorstehenden Ansprüche, **dadurch gekennzeichnet, dass** jede relative Position zwischen dem Beugungselement (2) und dem Matrixsensor (4) sich von mindestens einer der anderen relativen Positionen unterscheidet:
- gemäß einem ersten Schritt (dx_{C}) entlang einer ersten Bewegungsachse (16), wobei dieser erste Schritt vorzugsweise für alle relativen Positionen konstant ist, und/oder
- gemäß einem zweiten Schritt (dy_{C}) entlang einer zweiten Bewegungsachse (17), wobei dieser zweite Schritt vorzugsweise für alle relativen Positionen konstant ist.

16. Verfahren nach Anspruch 15, **dadurch gekennzeichnet, dass** es eine Berechnung eines Werts des ersten Schritts und/oder eines Werts des zweiten Schritts umfasst:
- die Berechnung eines Intensitäts- und/oder Phasengradienten- und/oder Phasenwerts, umfassend ein Lösen eines Gleichungssystems, das so viele Gleichungen umfasst wie die Anzahl der mehreren relativen Positionen zwischen dem Beugungselement (2) und dem Matrixsensor (4), wobei die Unbekannten des Gleichungssystems ganz oder teilweise in Abhängigkeit von der einfallenden elektromagnetischen Welle (9) sind
- wobei der berechnete Wert des ersten Schritts und/oder der berechnete Wert des zweiten Schritts dazu ausgelegt ist, die Berechnungsfehler der Unbekannten des Gleichungssystems zu minimieren.

17. Verfahren nach Anspruch 16, **dadurch gekennzeichnet, dass** die Berechnung eines Werts des ersten Schritts und/oder eines Werts des zweiten Schritts eine Maximierung der Determinante oder der Kondition einer Matrix umfasst, die diesem Gleichungssystem entspricht, das so viele Gleichungen umfasst wie die Anzahl der mehreren relativen Positionen zwischen dem Beugungselement (2) und dem Matrixsensor (4).

18. Verfahren nach einem der vorstehenden Ansprüche, **dadurch gekennzeichnet, dass** die mehreren Positionen mindestens drei unterschiedlichen Positionen entsprechen.

19. Verfahren nach einem der vorstehenden Ansprüche, **dadurch gekennzeichnet, dass** die mehreren Positionen mindestens neun unterschiedlichen Positionen entsprechen.

20. Verfahren nach einem der vorstehenden Ansprüche, **dadurch gekennzeichnet, dass** das Beugungselement ein relativ zu dem Matrixsensor (4) bewegliches Beugungselement (2) ist.

21. Verfahren nach Anspruch 20, **dadurch gekennzeichnet, dass** das Beugungselement (2) eine Hartmann-Maske, eine Shack-Hartmann-Maske, ein Beugungsgitter und/oder eine Kombination aus einem Intensitätsgitter und einem Phasengitter umfasst.

22. Verfahren nach einem der Ansprüche 1 bis 20, **dadurch gekennzeichnet, dass** das Beugungselement von einer relativ zu dem Matrixsensor (4) festen optischen Komponente getragen wird, wobei die optische Komponente dazu ausgelegt ist, das Beugungselement relativ zu dem Matrixsensor (4) zu verschieben, wobei die optische Komponente vorzugsweise ein räumlicher Lichtmodulator ist.

23. Verfahren nach einem der vorstehenden Ansprüche, **dadurch gekennzeichnet, dass** die Berechnung eines Intensitäts- und/oder Phasengradienten- und/oder Phasenwerts ein Lösen eines Gleichungssystems umfasst, das so viele Gleichungen wie die Anzahl der mehreren relativen Positionen zwischen dem Beugungselement (2) und dem Matrixsensor (4) umfasst, wobei die Unbekannten des Gleichungssystems ganz oder teilweise in Abhängigkeit von der einfallenden elektromagnetischen Welle (9) sind.

24. Verfahren nach Anspruch 23, **dadurch gekennzeichnet, dass** das Gleichungssystem unter Verwendung einer pseudoinversen Matrix gelöst wird.

25. Verfahren nach Anspruch 23 oder 24, **dadurch gekennzeichnet, dass** alle oder ein Teil der Unbekannten des Gleichungssystems in Abhängigkeit von einem Gradienten der Phase der einfallenden elektromagnetischen Welle (9) ausgedrückt werden.

26. Vorrichtung (1) für die Analyse einer elektromagnetischen Welle, umfassend:
- ein Beugungselement (2), das dazu ausgelegt ist, eine einfallende elektromagnetische Welle (9) zu empfangen und diese einfallende elektromagnetische Welle in eine gebeugte elektromagnetische Welle (10) umzuwandeln,
- einen Matrixsensor (4) mit einer Matrix von Pixeln, die entlang einer oder zwei Pixelausrichtungsachsen (13, 14) ausgerichtet sind, wobei der Sensor (4) dazu ausgelegt ist, eine Interferenzfigur der gebeugten elektromagnetischen Welle (10) aus dem Beugungselement (2) zu empfangen,
- die Vorrichtung (1), umfassend Bewegungsmittel (3), die dazu ausgelegt sind, die relative Position zwischen dem Beugungselement (2) und dem Matrixsensor (4) zu verändern,
wobei die Vorrichtung dazu ausgelegt ist, durch den Matrixsensor (4) mehrere Erfassungen eines Signals der gebeugten elektromagnetischen Welle (10), die mehreren relativen Positionen zwischen dem Beugungselement (2) und dem Matrixsensor (4) entsprechen, durchzuführen,
wobei die Vorrichtung Verarbeitungsmittel (6) umfasst, die dazu ausgelegt und/oder programmiert sind, um anhand der mehreren Erfassungen, die den mehreren relativen Positionen zwischen dem Beugungselement und dem Matrixsensor entsprechen, einen Intensitäts- und/oder Phasengradienten- und/oder Phasenwert für unterschiedliche Punkte von Interesse der einfallenden elektromagnetischen Welle zu berechnen,
**dadurch gekennzeichnet, dass** das Beugungselement dazu ausgelegt ist, mindestens drei Beugungsordnungen der einfallenden elektromagnetischen Welle bis auf den Sensor zu erzeugen, so dass diese Beugungsordnungen paarweise interferieren und dass die Fourier-Transformierte des durch den Matrixsensor (4) erhaltenen Signals unterschiedliche Oberschwingungen umfasst:
- welche den Interferenzen zwischen jedem Paar von Beugungsordnungen entsprechen, und
- bei der Berechnung eines Intensitäts- und/oder Phasengradienten- und/oder Phasenwerts berücksichtigt werden.

## Claims

1. Method for analyzing an electromagnetic wave, comprising:
- reception of an incident electromagnetic wave (9) by a diffractive element (2), and conversion of this incident electromagnetic wave (9) into a diffracted electromagnetic wave (10) by the diffractive element (2),
- reception, by a matrix-array sensor (4), of an interference pattern of the diffracted electromagnetic wave (10), the matrix-array sensor (4) having a matrix array of pixels aligned along one or two axis or axes of alignment of pixels (13, 14),
the method comprising several acquisitions, by the matrix-array sensor (4), of a signal of the diffracted electromagnetic wave (10) corresponding to several relative positions between the diffractive element (2) and the matrix-array sensor (4),
the method comprising a calculation, from the several acquisitions corresponding to the several relative positions between the diffractive element (2) and the matrix-array sensor (4), of a value for intensity and/or phase gradient and/or phase for different points of interest of the incident electromagnetic wave (9),
**characterized in that** the diffractive element (2) generates at least three diffraction orders of the incident electromagnetic wave (9) up to the sensor (4) so that these diffraction orders interfere two-by-two and so that the Fourier transform of the signal obtained by the matrix-array sensor (4) comprises different harmonics:
- corresponding to the interferences between each pair of diffraction orders, and
- taken into account in calculating a value for intensity and/or phase gradient and/or phase.

2. Method according to claim 1, **characterized in that** there is no optical mask and/or any other diffractive element between the diffractive element (2) and the sensor (4).

3. Method according to claim 1 or 2, **characterized in that** there is no optical element between the diffractive element (2) and the sensor (4).

4. Method according to any one of the preceding claims, **characterized in that** the diffractive element (2) generates at least four diffraction orders of the incident electromagnetic wave (9) up to the sensor (4).

5. Method according to any one of the preceding claims, **characterized in that** the interference pattern received by the matrix-array sensor, and taken into account in calculating a value for intensity and/or phase gradient and/or phase, comprises at least nine harmonics.

6. Method according to any one of the preceding claims, **characterized in that** it comprises generation of diffraction orders of the incident electromagnetic wave (9) by the diffractive element (2) alone.

7. Method according to any one of the preceding claims, **characterized in that** the diffractive element is a periodic pattern having a spatial periodicity along at least one or two axes of periodicity.

8. Method according to claim 7, **characterized in that** there is an angle of inclination (15) between:
- the axis or the axes of periodicity (11, 12), and
- the projection, on the plane of the diffractive element, of the axis or the axes of alignment of pixels (13, 14) and/or of the axis or the axes of displacement of the relative positions between the diffractive element and the matrix-array sensor.

9. Method according to claim 8, **characterized in that** it comprises a calculation of a value of the angle of inclination (15):
- the calculation of a value for intensity and/or phase gradient and/or phase comprising resolving a system of equations comprising as many equations as the number of the several relative positions between the diffractive element (2) and the matrix-array sensor (4), which system of equations has all or part of the unknowns being a function of the incident electromagnetic wave (9),
- the calculated value of the angle of inclination (15) being arranged in order to minimize the errors of calculation of the unknowns of said system of equations,
- the method comprising an adjustment of this angle of inclination (15) to the calculated value thereof.

10. Method according to claim 9, **characterized in that** the calculation of a value of the angle of inclination (15) comprises a maximization of the determinant or of the condition number of a matrix corresponding to this system of equations comprising as many equations as the number of the several relative positions between the diffractive element (2) and the matrix-array sensor (4).

11. Method according to any one of the preceding claims, **characterized in that** the several positions correspond to several relative positions between the diffractive element (2) and the matrix-array sensor (4) for a fixed position of the incident electromagnetic wave (9).

12. Method according to any one of the preceding claims, **characterized in that** the several positions correspond to several positions of the diffractive element (2) for a fixed position of the incident electromagnetic wave (9) and for a fixed position of the matrix-array sensor (4).

13. Method according to any one of the preceding claims, **characterized in that** the several positions correspond to several relative positions between the diffractive element (2) and the matrix-array sensor (4) along two axes of displacement (16, 17), preferably orthogonal to one another.

14. Method according to claim 13, **characterized in that** at least one of the two axes of displacement (16, 17), preferably each of the two axes of displacement, is orthogonal to a direction of propagation (29) of the incident electromagnetic wave (9) on the diffractive element (2).

15. Method according to any one of the preceding claims, **characterized in that** each relative position between the diffractive element (2) and the matrix-array sensor (4) differs from at least one of the other relative positions:
- according to a first pitch (dx_{C}) along a first axis of displacement (16), this first pitch preferably being constant for all the relative positions, and/or
- according to a second pitch (dy_{C}) along a second axis of displacement (17), this second pitch preferably being constant for all the relative positions.

16. Method according to claim 15, **characterized in that** it comprises a calculation of a value of the first pitch and/or of a value of the second pitch:
- the calculation of a value for intensity and/or phase gradient and/or phase comprising resolving a system of equations comprising as many equations as the number of the several relative positions between the diffractive element (2) and the matrix-array sensor (4), which system of equations has all or part of the unknowns being a function of the incident electromagnetic wave (9),
- the calculated value of the first pitch and/or the calculated value of the second pitch being arranged in order to minimize the errors of calculation of the unknowns of said system of equations.

17. Method according to claim 16, **characterized in that** the calculation of a value of the first pitch and/or of a value of the second pitch comprises a maximization of the determinant or of the condition number of a matrix corresponding to this system of equations comprising as many equations as the number of the several relative positions between the diffractive element (2) and the matrix-array sensor (4).

18. Method according to any one of the preceding claims, **characterized in that** the several positions correspond to at least three different positions.

19. Method according to any one of the preceding claims, **characterized in that** the several positions correspond to at least nine different positions.

20. Method according to any one of the preceding claims, **characterized in that** the diffractive element is a diffractive element (2) that is mobile with respect to the matrix-array sensor (4).

21. Method according to claim 20, **characterized in that** the diffractive element (2) comprises a Hartmann mask, a Shack-Hartmann mask, a diffraction grating, and/or a combination of an intensity grating and a phase grating.

22. Method according to any one of claims 1 to 20, **characterized in that** the diffractive element is borne by an optical component that is fixed with respect to the matrix-array sensor (4), said optical component being arranged in order to displace the diffractive element with respect to the matrix-array sensor (4), said optical component preferably being a spatial light modulator.

23. Method according to any one of the preceding claims, **characterized in that** the calculation of a value for intensity and/or phase gradient and/or phase comprises resolving a system of equations comprising as many equations as the number of the several relative positions between the diffractive element (2) and the matrix-array sensor (4), which system of equations has all or part of the unknowns being a function of the incident electromagnetic wave (9).

24. Method according to claim 23, **characterized in that** the system of equations is resolved by use of a pseudo inverse matrix.

25. Method according to claim 23 or 24, **characterized in that** all or part of the unknowns of the equation system are expressed as a function of a phase gradient of the incident electromagnetic wave (9).

26. Device (1) for analyzing an electromagnetic wave, comprising:
- a diffractive element (2) arranged in order to receive an incident electromagnetic wave (9) and in order to convert this incident electromagnetic wave into a diffracted electromagnetic wave (10),
- a matrix-array sensor (4) having a matrix array of pixels aligned along one or two axis or axes of alignment of pixels (13, 14), said sensor (4) being arranged in order to receive an interference pattern of the diffracted electromagnetic wave (10) originating from the diffractive element (2),
the device (1) comprising displacement means (3) arranged in order to modify the relative position between the diffractive element (2) and the matrix-array sensor (4),
said device being arranged in order to carry out several acquisitions, by the matrix-array sensor (4), of a signal of the diffracted electromagnetic wave (10) corresponding to several relative positions between the diffractive element (2) and the matrix-array sensor (4),
the device comprising processing means (6) arranged and/or programmed in order to calculate, from the several acquisitions corresponding to the several relative positions between the diffractive element and the matrix-array sensor, a value for the intensity and/or phase gradient and/or phase for different points of interest of the incident electromagnetic wave,
**characterized in that** the diffractive element is arranged in order to generate at least three diffraction orders of the incident electromagnetic wave up to the sensor, so that these diffraction orders interfere two-by-two and so that the Fourier transform of the signal obtained by the matrix-array sensor (4) comprises different harmonics:
- corresponding to the interferences between each pair of diffraction orders, and
- taken into account in calculating a value for intensity and/or phase gradient and/or phase.
